(19) Europäisches Patentamt
European Patent Office
Office européen des brevets

(11) **EP 1 908 562 B1**

(12) **EUROPEAN PATENT SPECIFICATION**

(45) Date of publication and mention
of the grant of the patent:
**26.05.2010 Bulletin 2010/21**

(51) Int Cl.:
**B27K 3/15** (2006.01)          **B27D 1/08** (2006.01)
**B27H 1/00** (2006.01)          **B32B 21/14** (2006.01)

(21) Application number: **07013389.7**

(22) Date of filing: **09.07.2007**

(54) **Method of forming a wooden mold as well as wooden structure, vehicle interior material, and acoustic structure processed by the method**

Verfahren zur Herstellung einer hölzernen Form, hölzerne Struktur, Innenmaterial eines Fahrzeugs und mit diesem Verfahren bearbeitete akustische Struktur

Procédé de formation d'un moule en bois ainsi qu'une structure en bois, matériau intérieur de véhicule, et structure acoustique associée au procédé

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.07.2006 JP 2006198192**

(43) Date of publication of application:
**09.04.2008 Bulletin 2008/15**

(73) Proprietor: **YAMAHA CORPORATION**
**Naka-ku**
**Hamamatsu-shi**
**Shizuoka-ken (JP)**

(72) Inventors:
• **Hiraku, Tatsuya**
**Hamamatsu-shi**
**Shizuoka-ken (JP)**
• **Kirihara, Tomoko**
**Hamamatsu-shi**
**Shizuoka-ken (JP)**

(74) Representative: **Emde, Eric**
**Wagner & Geyer**
**Gewürzmühlstrasse 5**
**80538 München (DE)**

(56) References cited:
**WO-A-2005/042175          US-A- 4 504 520**
**US-A1- 2003 150 548          US-A1- 2004 038 062**

**Description**

BACKGROUND OF THE INVENTION

Field of the Invention

The present invention generally relates to a method of forming a wooden mold as well as a wooden structure prepared by the method, a vehicle interior material processed by the method, and an acoustic structure processed by the method.

Priority is claimed on Japanese Patent Application No. 2006-198192, filed July 20, 2006, the content of which is incorporated herein by reference.

Description of the Related Art

All patents, patent applications, patent publications, scientific articles, and the like, which will hereinafter be cited or identified in the present application, will hereby be incorporated by reference in their entirety in order to describe more fully the state of the art to which the present invention pertains.

Wood is poor in dimensional stability. It has been required to improve the dimensional stability of wood. There has been well known a first conventional technique to impregnate wood with polyethylene glycol (PEG) for the purpose of improving the dimensional stability of wood. The first conventional technique is disclosed in Japanese Unexamined Patent Application, First Publication, No. 2002-144301. A PEG-impregnated wood has high moisture absorption so that PEG is soaked or solved into water.

Japanese Patent No. 3198471 discloses the following second conventional technique to solve the above problem with the first conventional technique. Wood is impregnated with a solution that contains a polymer catalyst and a water-soluble epoxy compound having two or more epoxy groups in its molecule. The epoxy compound is then polymerized and cured.

Japanese Unexamined Patent Application, First Publication, No. 5-220712 discloses a third conventional technique for improving the dimensional stability of wood. An impregnant is applied on wood and polymerized thereon so that the polymerized impregnant is secured to wood. The impregnant contains at least one monomer, at least one cross-linking agent, and a polymer catalyst. The at least one monomer is selected from polyethylene glycol monoacrylate and polyethylene glycol monomethacrylate.
The at least one cross-linking agent is selected from polyethylene glycol diacrylate, polyethylene glycol dimethacrylate, and methylenebisacrylamid.

The second conventional technique can not sufficiently prevent the impregnated epoxy compound from being solved into water. A thin wood board having a thickness of not more than 1 mm is suitable to be bent. The epoxy compound that is impregnated in the thin wood board may remarkably be solved into water.

The third conventional technique can not sufficiently prevent the polymer of the impregnant from being soaked or solved into water because the polymer of the impregnant has a number of hydroxyl groups in its molecule.

Prior art document WO 2005/042175 A1 discloses methods of strengthening and/or protecting wood products with reactive monomers and other impregnable materials. Furthermore, this document describes a method for treating a wood product comprising the steps of impregnating the wood product with at least one crosslinkable monomer, wherein the monomer is capable of penetrating a cell wall of the wood product and polymerizing the at least one crosslinkable monomer.

Document US-A-4 504 520 describes a process for producing the wood head of a golf club by impregnating a wood head workpiece with a resin to give durability to the wood head, the process comprising the steps of forming the workpiece so that the hitting surface thereof extends in parallel with internal channels therein, subsequently immersing the workpiece in a first liquid resin composition only at the hitting side to impregnate the hitting side with the composition at a high ratio and form a resin-impregnated layer of high impregnation ratio, thereafter impregnating the entire workpiece with a second liquid resin composition at a low ratio, and polymerizing and curing the compositions.

Document US 2004/038062 A1 discloses methods for making a coated thin veneer, plank or wood product in which the coated surface does not crack due to instability of the wood involve applying to a veneer, plank or wooed product a composition including a hydrophilic polymer and a reactive monomer or a composition including a reactive (meth)acrylate.

From US 2003/150548 A1 a method is known for producing veneered compressed parts, wherein a carrier preferably consisting of aluminum, an intermediate sheet of veneer and a cover sheet of veneer are glued together by exerting a pressure over 200 M/cm$^2$ at a temperature higher than 120°C in a molding press as to form a unfinished molded part.

In view of the above, it will be apparent to those skilled in the art from this disclosure that there exists a need for improved techniques. This invention addresses this need in the art as well as other needs, which will become apparent to those skilled in the art from this disclosure.

SUMMARY OF THE INVENTION

Accordingly, it is a primary object of the present invention to provide a method of forming a wooden mold free from the above problems or disadvantages.

It is another object of the present invention to provide a method of forming a wooden mold that has a three-dimensional shape.

It is a further object of the present invention to provide a method of forming a wooden mold that has a high dimensional-stability.

It is a still further object of the present invention to provide a method of forming a wooden mold that can present a resin from being flown into moisture.

It is yet a further object of the present invention to provide a wooden structure prepared by a method of forming a wooden mold free from the above problems or disadvantages.

It is an additional object of the present invention to provide a wooden structure prepared by a method of forming a wooden mold that has a three-dimensional shape.

It is another object of the present invention to provide a wooden structure prepared by a method of forming a wooden mold that has a high dimensional-stability.

It is still another object of the present invention to provide a wooden structure prepared by a method of forming a wooden mold that can present a resin from being flown into moisture.

It is yet another object of the present invention to provide a vehicle interior material processed by a method of forming a wooden mold free from the above problems or disadvantages.

It is further more object of the present invention to provide a vehicle interior material processed by a method of forming a wooden mold that has a three-dimensional shape.

It is moreover object of the present invention to provide a vehicle interior material processed by a method of forming a wooden mold that has a high dimensional-stability.

It is still more object of the present invention to provide a vehicle interior material processed by a method of forming a wooden mold that can present a resin from being flown into moisture.

It is yet more object of the present invention to provide an acoustic structure prepared by a method of forming a wooden mold free from the above problems or disadvantages.

It is an additional object of the present invention to provide an acoustic structure prepared by a method of forming a wooden mold that has a three-dimensional shape.

It is a still additional object of the present invention to provide an acoustic structure prepared by a method of forming a wooden mold that has a high dimensional-stability.

It is yet an additional object of the present invention to provide an acoustic structure prepared by a method of forming a wooden mold that can present a resin from being flown into moisture.

These and other objects are solved by a method of forming a wooden mold, the method comprising the features as set forth in claim 1. Preferred embodiments of this method are stated in the subclaims 2 to 16. The objects are also met by a wooden structure as disclosed in claim 17. Subclaims 18 and 19 define preferred embodiments of the wooden structure of claim 17.

In accordance with a first aspect of the present invention, a method of forming a wooden mold may include, but is not limited to, the following processes. A resin solution may be impregnated into at least one wood board thereby forming at least one resin-impregnated wood board. The resin solution may include a resin component. The resin component may include at least one water-soluble bifunctional acrylic resin and at least one trifunctional or higher-functional acrylic resin. The at least one resin-impregnated wood board may be deformed. The resin component in the at least one resin-impregnated wood board may be cured.

In some cases, curing the resin component may be carried out at the same time of deforming the at least one resin-impregnated wood board.

In other cases, curing the resin component may be carried out after deforming the at least one resin-impregnated wood board.

In some cases, the resin solution may further include at least a curing agent so that the resin solution containing the at least one curing agent may be impregnated into the at least one wood board. In this case, the curing the resin component may be carried out by a hot press process at the same time of deforming the at least one resin-impregnated wood board.

In some cases, the at least one resin-impregnated wood board may be dipped into a curing solution that contains at least a curing agent prior to curing the resin component, after the resin solution has been impregnated into the at least one wood board.

In some cases, the at least one wood board may be plural wood boards, and the at least one resin-impregnated wood board may be plural resin-impregnated wood boards. In a case, the plural resin-impregnated wood boards may be stacked thereby forming a stack structure, after the resin solution has been impregnated into the plural wood boards. The stack structure is thus deformed. In another case, the resin component may be cured while contacting the plural resin-impregnated wood boards with each other.

The wood board may preferably have a thickness in the range of 0.1 mm to 1 mm.

The at least one water-soluble bifunctional acrylic resin may preferably have a number average molecular weight in the range of 300 to 2500.

Typically, the resin component may include the at least one water-soluble bifunctional acrylic resin and the at least one trifunctional or higher-functional acrylic resin only. In this case, the content of the at least one trifunctional or higher-functional acrylic resin in the resin component may preferably be in the range of 1 wt. % to 20 wt. %, while the content of the water-soluble bifunctional acrylic resin is the remaining percentage.

In some cases, the at least one wood board may be plural wood boards, and the at least one resin-impregnated wood board may be plural resin-impregnated wood boards. In a case, at least one built-in backup board may be prepared. The plural resin-impregnated wood boards and the at least one built-in backup board may be stacked, so that the at least one built-in backup board is interposed between the plural resin-impregnated wood boards, thereby forming a stack structure. Then, the stack structure may be deformed.

In some cases, at least one backup board may be prepared. The at least one resin-impregnated wood board may be deformed along the shape of the at least one backup board so as to adhere the at least one resin-impregnated wood board with the at least one backup board.

In some cases, it may be possible to form at least one backup board that extends along the at least one resin-impregnated wood board, after deforming the at least one resin-impregnated wood board, and after curing the resin component. In this case, the at least one backup board may be carried out by employing an injection molding process.

In some cases, at least one backup board may be prepared. The at least one backup board may be adhered to the at least one resin-impregnated wood board, after deforming the at least one resin-impregnated wood board, and after curing the resin component.

In accordance with a second aspect of the present invention, a wooden structure may include, but is not limited to, at least one resin-impregnated wood board that includes a resin component. The resin component may include at least one water-soluble bifunctional acrylic resin and at least one trifunctional or higher-functional acrylic resin.

Namely, the resin component includes one or more water-soluble bifunctional acrylic resins and one or more trifunctional or higher-functional acrylic resins. In some cases, the resin component includes one water-soluble bifunctional acrylic resin and one trifunctional or higher-functional acrylic resin. In other cases, the resin component may include plural water-soluble bifunctional acrylic resins and plural trifunctional or higher-functional acrylic resins. In other cases, the resin component may include one water-soluble bifunctional acrylic resin and plural trifunctional or higher-functional acrylic resins. In other cases, the resin component may include plural water-soluble bifunctional acrylic resins and one trifunctional or higher-functional acrylic resin.

In some cases, the at least one resin-impregnated wood board may preferably have a thickness in the range of 0.1 mm to 1 mm.

In some cases, the at least one water-soluble bifunctional acrylic resin may preferably have a number average molecular weight in the range of 300 to 2500.

In some cases, the resin component may include the at least one water-soluble bifunctional acrylic resin and the at least one trifunctional or higher-functional acrylic resin only. In this case, the content of the at least one trifunctional or higher-functional acrylic resin in the resin component may preferably be in the range of 1 wt. % to 20 wt. %, while the content of the water-soluble bifunctional acrylic resin is the remaining percentage. The resin solution can be used which contains the resin component. The resin component includes the water-soluble bifunctional acrylic resin and the trifunctional or higher-functional acrylic resin only. The content of trifunctional or higher-functional acrylic resin in the resin component may be ranged from 1 wt. % to 20 wt. %, while the content of water-soluble bifunctional acrylic resin in the resin component may be ranged from 80 wt. % to 99 wt. %. In this case, the resin component in the wooden mold 10 should also include substantially the same content of trifunctional or higher-functional acrylic resin and the same content of water-soluble bifunctional acrylic resin as those of the resin component contained in the resin solution. Thus, the resin component in the wooden mold 10 should include 80 wt. % to 99 wt. % of water-soluble bifunctional acrylic resin and 1 wt. % to 20 wt. % of trifunctional or higher-functional acrylic resin.

In accordance with one aspect of the present invention, the wood board may be impregnated with the resin solution to form the resin-impregnated wood board. The resin solution may contain the resin component which may include, but is not limited to, at least one water-soluble bifunctional acrylic resin and at least one trifunctional or higher-functional acrylic resin. The resin-impregnated wood board may then be deformed to have a desired three-dimensional shape. The resin component in the resin-impregnated wood board may be cured at the same time or after the resin-impregnated wood board may then be deformed, thereby producing the wooden mold.

Thus, the wooden mold prepared by the above method may contain the resin component that includes, but is not limited to, the at least one water-soluble bifunctional acrylic resin and the at least one trifunctional or higher-functional acrylic resin. The resin component, which includes the water-soluble bifunctional acrylic resin and the trifunctional or higher-functional acrylic resin, will provide the wooden mold with superior dimensional stability and moisture resistance as well as higher surface-rigidity as compared to when another resin solution is used, which containing a resin component of water-soluble bifunctional resin component only.

In some cases, the method of forming the wooden mold may include the process for deforming the resin-impregnated wood board and the process for curing the resin component that is impregnated in the resin-impregnated wood board. Both the processes for deformation and curing make it possible to obtain a desired three-dimensional shape of the wooden mold.

In general, the reduction in the thickness of the wood board may prevent the wood board from being cracked by the deformation thereof. The reduction in the thickness of the wood board may, however, increase the amount of the resin to be flown out of the resin-impregnated wood board.

In some cases, the method of forming the wooden mold provides the increased moisture resistance which may allow the reduction in the thickness of the wood board while suppressing the impregnated resin from being flown out of the resin-impregnated wood board. The reduction in the thickness of the wood board may increase the flexibility in the three-dimensional shape of the wooden mold. The method of forming the wooden mold may be effective to realize a wooden mold with a desired highly stable three-dimensional shape.

In some cases, the three-dimensional shape of the deformed resin-impregnated wood board is fixed, while the resin-impregnated wood board has been swelled. This may prevent any undesired variation in the dimensions of the wooden mold due to a possible post-absorption of moisture. This means that the wooden mold has high dimensional stability.

In accordance with one aspect of the present invention, the resin solution contains the resin component which includes the water-soluble bifunctional acrylic resin and the trifunctional or higher-functional acrylic resin. The resin solution can be impregnated into the wood board, thereby swelling the resin-impregnated wood board. This provides high flexibility to the resin-impregnated wood board. The high flexibility may prevent the resin-impregnated wood board from being cracked while the resin-impregnated wood board is deformed. Curing the impregnated resin component including the water-soluble bifunctional acrylic resin and the trifunctional or higher-functional acrylic resin forms a three-dimensional cross-linking structure or complex mesh structure. The three-dimensional cross-linking structure of the impregnated resin component is likely to be securely caught by the internal tissues of the wood board 1, thereby making the impregnated resin component water-insoluble. The three-dimensional cross-linking structure of the impregnated resin component can prevent the impregnated resin component from being flown into moisture. Also, the three-dimensional cross-linking structure of the impregnated resin component improves the formability of the wooden mold.

One aspect of the present invention provides a wooden mold having a desired three dimensional shape, a highly dimensional stability, and a high moisture resistance. Other aspects of the present invention provide wooden structures having a desired three dimensional shape, a highly dimensional stability, and a high moisture resistance. Typical examples of the wooden structures may include, but are not limited to, a wooden structure for vehicle interior and an acoustic wooden structure.

These and other objects, features, aspects, and advantages of the present invention will become apparent to those skilled in the art from the following detailed descriptions taken in conjunction with the accompanying drawings, illustrating the embodiments of the present invention.

BRIEF DESCRIPTION OF THE DRAWINGS

Referring now to the attached drawings which form a part of this original disclosure:

FIG 1 is a schematic cross sectional elevation view illustrating an example of a wooden structure in accordance with a first embodiment of the present invention;

FIGS. 2A through 2C are schematic cross sectional views illustrating wooden molds in sequential steps involved in a method of producing the wooden structure shown in FIG 1;

FIG 3 is a schematic cross sectional elevation view illustrating another example of a wooden structure in accordance with a second embodiment of the present invention;

FIGS. 4A and 4B are schematic cross sectional views illustrating wooden molds in sequential steps involved in a method of producing the wooden structure shown in FIG 3;

FIG 5 is a schematic cross sectional elevation view illustrating still another example of a wooden structure in accordance with a third embodiment of the present invention;

FIGS. 6A through 6D are schematic cross sectional views illustrating wooden molds in sequential steps involved in a method of producing the wooden structure shown in FIG 5;

FIG 7A is a schematic cross sectional elevation view illustrating still another example of a wooden structure for vehicle interior in accordance with a fourth embodiment of the present invention;

FIG 7B is a schematic cross sectional elevation view illustrating the wooden structure for vehicle interior in one step involved in a method of forming the wooden structure of FIG 7A;

FIGS. 8A through 8D are schematic cross sectional elevation views illustrating wooden molds in sequential steps involved in another method of producing the wooden mold shown in FIG 5 in accordance with a fifth embodiment of the present invention;

FIG 9A is a plan view illustrating a wooden product for vehicle interior in Example 10 of the present invention;

FIG 9B is a cross sectional elevation view illustrating the wooden product for vehicle interior of FIG 9A;

FIG 10A is a plan view illustrating a wooden product for vibration plate in a step involved in a process for preparing the same;

FIG 10B is a cross sectional elevation view illustrating the wooden product for vibration plate of FIG 10A; and

FIG 11 is a table showing Examples 1-9 of the present invention and Comparative Examples 1-5.

## DETAILED DESCRIPTION OF THE INVENTION

Selected embodiments of the present invention will now be described with reference to the drawings. It will be apparent to those skilled in the art from this disclosure that the following descriptions of the embodiments of the present invention are provided for illustration only and not for the purpose of limiting the invention as defined by the appended claims and their equivalents.

First Embodiment:

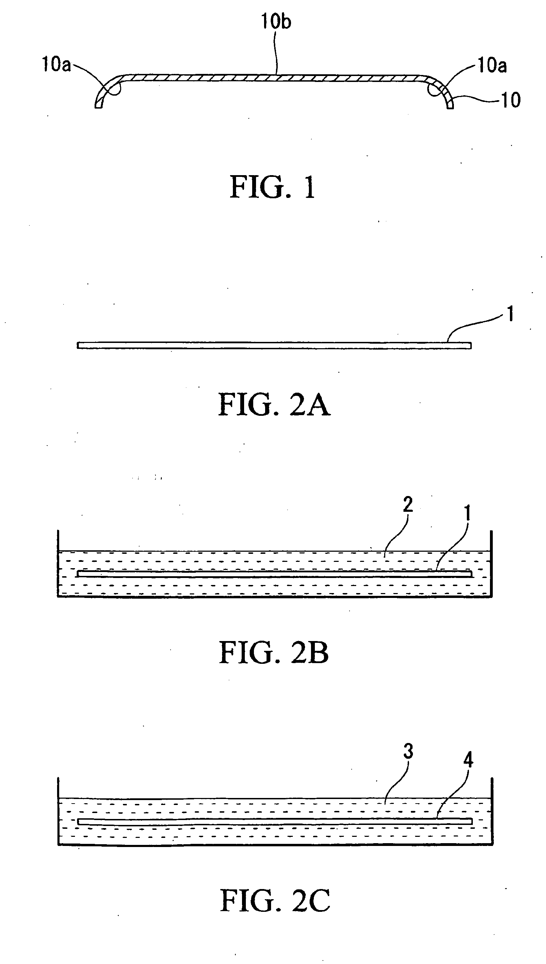

FIG 1 is a schematic cross sectional elevation view illustrating an example of a wooden structure in accordance with a first embodiment of the present invention. FIGS. 2A through 2C are schematic cross sectional views illustrating wooden molds in sequential steps involved in a method of producing the wooden structure shown in FIG 1. The wooden structure can be realized by or may include, but not limited to, a wooden mold 10.

As shown in FIG 1, the wooden mold 10 has a main central portion 10b and opposing side portions 10a that extend from the main central portion 10b. The main central portion 10b is flat, while the opposing side portions 10a are curved or bent toward the same direction. The wooden mold 10 can be formed as follows.

As shown in FIG 2A, a wood board 1 can be used for the wooden mold 10. Typical examples of the material for the wood board 1 may include, but are not limited to, spruce, maple, and walnut. A typical example of the thickness of the wood 1 may be ranged from approximately 0.1 mm to approximately 1 mm. If the thickness of the wood board 1 is less than 0.1 mm, then the wood board 1 may be transparent and may provide poor artistic impression. If the thickness of the wood board 1 is more than 1 mm, then the wood board 1 may be split while being bent. Namely, it may be difficult to provide a three-dimensional shape to the wood board 1 that is thicker than 1 mm.

The wood board 1 may be pretreated prior to the use thereof. Typical examples of the pretreatment may include, but are not limited to, bleaching, dying processes, and alkali treatment. In a typical case, the wood board 1 may be pretreated as shown in FIG 2B. The wood board 1 may be dipped in a treatment solution 2. Typical examples of the treatment solution 2 may include, but are not limited to, a bleacher-containing solution and a water-based paint. The treatment solution 2 may preferably be water-soluble. Using a water-soluble treatment solution allows that a resin solution is impregnated into the wood board 1, without drying the water-soluble treatment solution. In other words, using the water-soluble treatment solution allows that immediately after the wood board 1 is pretreated with the water-soluble treatment solution, a resin solution is impregnated into the wood board 1 without drying the water-soluble treatment solution. This may shorten the time for processing the wood board 1.

As shown in FIG 2C, the wood board 1 that has been pretreated with the treatment solution is then dipped into a resin solution 3 so as to impregnate the resin solution into the wood board 1, thereby producing a resin-impregnated wood board 4. The resin solution 3 is impregnated from the surface of the wood board 1 into fiber clearances and cell walls thereof, thereby swelling the resin-impregnated wood board 4. The resin-impregnated wood board 4 has a higher flexibility than the wood board 1. The resin-impregnated wood board 4 with high flexibility is easy to be bent.

In some cases, the wood board 1 may be impregnated with the resin solution 3 by simply dipping the wood board 1 into the resin solution 3. A typical example of the time period for dipping the wood board 1 into the resin solution 3 may be ranged from 30 minutes to a few days.

In other cases, the wood board 1 may also be impregnated with the resin solution 3 by dipping the wood board 1 in the resin solution 3 while depressurizing the wood board 1 to remove air from the wood board 1. A typical example of the time period for dipping the wood board 1 into the resin solution 3 may be ranged from several minutes to several ten minutes.

In still other cases, the wood board 1 may also be impregnated with the resin solution 3 by depressurizing the wood board 1 to remove air from the wood board 1 prior to dipping the wood board 1 in the resin solution 3 so as to promote the impregnation of the resin solution 3 into the wood board 1. A typical example of the time period for dipping the wood board 1 into the resin solution 3 may be several minutes.

In some cases, the resin solution 3 may include a resin component, a curing agent, a surfactant, and water. The resin component includes at least a water-soluble bifunctional acrylic resin and at least a trifunctional or higher-functional acrylic resin. Namely, the resin component includes one or more water-soluble bifunctional acrylic resins and one or more trifunctional or higher-functional acrylic resins. In some cases, the resin component includes one water-soluble bifunctional acrylic resin and one trifunctional or higher-functional acrylic resin. In other cases, the resin component may include plural water-soluble bifunctional acrylic resins and plural trifunctional or higher-functional acrylic resins. In other cases, the resin component may include one water-soluble bifunctional acrylic resin and plural trifunctional or higher-functional acrylic resins. In other cases, the resin component may include plural water-soluble bifunctional acrylic resins and one trifunctional or higher-functional acrylic resin.

Water-Soluble Bifunctional Acrylic Resin:

Typically, the water-soluble bifunctional acrylic resin may be polymers having two acrylate-terminals or two methacrylate-terminals. A typical example of the water-soluble bifunctional acrylic resin may include, but is not limited to, polyethylene glycol dimethacrylate and polyethylene glycol diacrylate.

A typical example of the number average molecular weight of the water-soluble bifunctional acrylic resin may be ranged from 300 to 2500, and preferably ranged from 500 to 1000. If the number average molecular weight of the water-soluble bifunctional acrylic resin is less than 300, the water-solubility thereof is poor so as to make it difficult to uniformly disperse the water-soluble bifunctional acrylic resin into the resin solution 3. If the number average molecular weight of the water-soluble bifunctional acrylic resin is greater than 2500, the dimension of molecule thereof is so large as to make it difficult to impregnate the water-soluble bifunctional acrylic resin into cell wall of the wood board 1 and thus it is difficult to sufficiently swell the wood board 1. Poor swelling of the wood board 1 will produce the resin-impregnated wood board 4 that has poor flexibility, although the resin-impregnated wood board 4 needs high flexibility that makes it easy to bend the resin-impregnated wood board 4.

Trifunctional or Higher-Functional Acrylic Resin:

Typically, the trifunctional or higher-functional acrylic resin may be polymers having acrylate or methacrylate which reacts with double bond of the water-soluble bifunctional acrylic resin. A typical example of the trifunctional or higher-functional acrylic resin may include, but is not limited to, trifunctional acrylic resin and quadrifunctional acrylic resin. The trifunctional or higher-functional acrylic resin may be water-soluble or water-insoluble. Preferably, the trifunctional or higher-functional acrylic resin is preferably water-soluble because the water-soluble trifunctional or higher-functional acrylic resin is easy to be uniformly dispersed into the resin solution 3.

A typical example of the trifunctional acrylic resin may include, but is not limited to, pentaerythritol triacrylate, pentaerythritol trimethacrylate, trimethylolpropane triacrylate, trimethylolpropane trimethacrylate, propylene oxide modified trimethylolpropane triacrylate, propylene oxide modified trimethylolpropane trimethacrylate, ethylene oxide modified trimethylolpropane triacrylate, ethylene oxide modified trimethylolpropane trimethacrylate, ethylene oxide modified isocyanuric acid triacrylate, and ethylene oxide modified isocyanuric acid trimethacrylate.

A typical example of the quadrifunctional or higher-functional acrylic resin may include, but is not limited to, dipentaerythritol pentaacrylate, dipentaerythritol pentamethacrylate, dipentaerythritol hexaacrylate, dipentaerythritol hexamethacrylate, ditrimethylolpropane tetracrylate, ditrimethylolpropane tetramethacrylate, pentaerythritol tetraacrylate, and pentaerythritol tetramethacrylate.

The number average molecular weight of the trifunctional or higher-functional acrylic resin may preferably be not greater than 2000. If the number average molecular weight of the trifunctional or higher-functional acrylic resin is greater than 2000, the dimension of molecule thereof is so large as to make it difficult to impregnate the trifunctional or higher-functional acrylic resin into cell wall of the wood board 1 and thus it is difficult to sufficiently swell the wood board 1. Poor swelling of the wood board 1 will produce the resin-impregnated wood board 4 that has poor flexibility, although the resin-impregnated wood board 4 needs high flexibility that makes it easy to bend the resin-impregnated wood board 4.

In some cases, the resin component includes the water-soluble bifunctional acrylic resin and the trifunctional or higher-functional acrylic resin only. The content of trifunctional or higher-functional acrylic resin in the resin component may be ranged from 1 wt. % to 20 wt. %, while the content of water-soluble bifunctional acrylic resin in the resin component may be ranged from 80 wt. % to 99 wt. %. If the content of trifunctional or higher-functional acrylic resin is less than 1%, a poor three-dimensional crosslinking structure is obtained by curing the resin component. The poor three-dimensional crosslinking structure provides insufficient effect to prevent the resin from being flown into water or moisture. If the content of trifunctional or higher-functional acrylic resin is greater than 20 wt. %, the trifunctional or higher-functional acrylic resin is difficult to be uniformly dispersed into the resin solution 3. Non-uniform dispersion of the trifunctional or higher-functional acrylic resin into the resin solution 3 causes variation in quality of the wooden mold 10. Non-uniform dispersion of the trifunctional or higher-functional acrylic resin into the resin solution 3 makes it difficult to ensure stable production of the wooden mold 10.

Curing Agent:

A typical example of the curing agent may include, but is not limited to, polymerization initiators. Typical examples of the polymerization initiators may include, but are not limited to, azo derivatives, organic peroxide, oxidizing agents, combinations of oxidizing agent and reducing agent. The azo derivatives are preferable as the curing agent. Typical examples of the azo derivatives may include, but are not limited to, 2,2 'azobis(2-methylpropion-amidine) dihydrochloride, and 2,2 'azobis(2-methyl-N (hydroxyl ethyl) propionamide). Typical examples of the oxidizing agent may include, but are not limited to, persulfates such as ammonium persulfate, sodium persulfate, and potassium persulfate. Typical examples of the reducing agent may include, but are not limited to, diethanol amine, sodium thiosulfate, and hydrazine. It is preferable to select the water-soluble curing agent. In some cases, a single curing agent may be contained in the resin solution. In other cases, plural curing agents may be contained in the resin solution.

Surfactant:

Any available surfactants can be used as long as the trifunctional or higher-functional acrylic resin can be dispersed into the resin solution 3. Nonionic surfactants are preferable because nonionic surfactants may provide no influence to the wood board 1. The trifunctional or higher-functional acrylic resin may effectively be dispersed into a surfactant-containing resin solution 3. Namely, containing a surfactant into the resin solution 3 may promote the dispersion of the trifunctional or higher-functional acrylic resin into the surfactant-containing resin solution 3. However, the resin solution 3 may be free of any surfactant, if the trifunctional or higher-functional acrylic resin has high water-solubility and high dispersibility.

The concentration of the resin component (solid component) in the resin solution 3 may be preferably 5% to 80%, and more preferably 10% to 60%. If the concentration of the resin component (solid component) in the resin solution 3 is less than 5%, then it may be difficult to improve the moisture resistance, the flexibility, and the fillability of the resin-impregnated wood board 4. The moisture resistance, the flexibility, and the fillability are obtained by impregnating the resin solution 3 into the wood board 1 and curing the resin-impregnated wood board 4. If the concentration of the resin component (solid component) in the resin solution 3 is more than 80%, then the ratio of water in the resin solution 3 is low, and the swelling property of the wood board 1 is poor. The low water ratio and the poor swelling property may disturb that the resin solution 3 is sufficiently impregnated into the wood board 1. The low water ratio and the poor swelling property may provide poor flexibility that makes it difficult to bend the resin-impregnated wood board 4.

The resin-impregnated wood board 4 is then dried. The drying process may be carried out by placing the resin-impregnated wood board 4 in an atmosphere at the ordinary temperature for a few hours so that the resin-impregnated wood board 4 is approximately half-dried.

Drying the resin-impregnated wood board 4 can prevent the resin solution 3 from dripping from the resin-impregnated wood board 4 and also prevent the resin solution 3 from seeping out of the resin-impregnated wood board 4.

The drying process causes moisture to be discharged from the resin-impregnated wood board 4, while leaving the resin component in fiber clearances and cell walls of the resin-impregnated wood board 4, thereby maintaining the swell of the resin-impregnated wood board 4. The swell of the resin-impregnated wood board 4 can provide a wrinkle-free surface of the resin-impregnated wood board 4. The swell of the resin-impregnated wood board 4 can allow that the wooden mold 10 having a wrinkle-free surface is produced by curing the resin-impregnated wood board 4. The wrinkle-free surface of the wooden mold 10 can provide good appearance thereof. The dried resin-impregnated wood board 4 is then subjected to a hot press process. The hot press process deforms the dried resin-impregnated wood board 4 thereby providing an intended three-dimensional shape thereto, while curing the resin component of the dried resin-impregnated wood board 4 thereby defining the deformed shape of the dried resin-impregnated wood board 4. The deformation and curing of the dried resin-impregnated wood board 4 forms the wooden mold 10 with the intended three-dimensional shape. As described above and shown in FIG 1, the wooden mold 10 has the main central portion 10b and the opposing side portions 10a that extend from the main central portion 10b. The main central portion 10b is flat, while the opposing side portions 10a are curved or bent toward the same direction.

The impregnation process provides the resin-impregnated wood board 4 with the swell, so that the resin-impregnated wood board 4 has sufficient flexibility that makes it easy to deform the resin-impregnated wood board 4 by the hot press process. The hot press process deforms the resin-impregnated wood board 4, while causing a cross-linking reaction of the resin component that has been impregnated into the fiber clearances and cell walls of the wood board 1. The cross-linking reaction of the resin component maintains the swell of the resin-impregnated wood board 4, while defining the deformed shape of the resin-impregnated wood board 4, thereby forming the wooden mold 10.

The hot press process can, for example, be carried out under the pressure of 0.1 MPa to 3 MPa at a temperature of 80°C to 150°C for 1 minute to 10 minutes.

In some cases, as described above, the curing process for the resin-impregnated wood board 4 is carried out while deforming the resin-impregnated wood board 4 although it is not essential that the curing process is carried out at the same time when the resin-impregnated wood board 4 is deformed or bent. For example, it is possible that the curing process is carried out after the resin-impregnated wood board 4 is deformed or bent.

The resin-impregnated wood board 4 can be deformed by any available deformation methods as long as the deformation method can provide an intended three-dimensional shape to the resin-impregnated wood board 4, thereby forming the wooden mold 10. A typical example of the deformation methods may include, but is not limited to, a press process. The press process can be carried out using pressing dies.

The resin-impregnated wood board 4 can be cured by any available curing methods. A typical example of the curing methods may include, but is not limited to, a heat treatment. In some cases, the heat treatment can be carried out by heating the press dies that contain the deformed resin-impregnated wood board 4. In other cases, the heat treatment can also be carried out by heating the deformed resin-impregnated wood board 4 after the deformed resin-impregnated wood board 4 is released from the pressing dies. An oven can be used to heat the deformed resin-impregnated wood board 4.

As described above, the wood board 1 is impregnated with the resin solution 3 to form the resin-impregnated wood board 4. The resin solution 3 contains the resin component which includes, but is not limited to, the water-soluble bifunctional acrylic resin and the trifunctional or higher-functional acrylic resin. The resin-impregnated wood board 4 is deformed and the resin component in the resin-impregnated wood board 4 is cured, thereby producing the wooden mold 10. The wooden mold 10 contains the resin component that includes, but is not limited to, the water-soluble bifunctional acrylic resin and the trifunctional or higher-functional acrylic resin. The resin component including the water-soluble bifunctional acrylic resin and the trifunctional or higher-functional acrylic resin will provide superior dimensional stability and moisture resistance to the wooden mold 10.

As described above, the resin solution can be used which contains the resin component. The resin component includes the water-soluble bifunctional acrylic resin and the trifunctional or higher-functional acrylic resin only. The content of trifunctional or higher-functional acrylic resin in the resin component may be ranged from 1 wt. % to 20 wt. %, while the content of water-soluble bifunctional acrylic resin in the resin component may be ranged from 80 wt. % to 99 wt. %. In this case, the resin component in the wooden mold 10 should also include substantially the same content of trifunctional or higher-functional acrylic resin and the same content of water-soluble bifunctional acrylic resin as those of the resin component contained in the resin solution. Thus, the resin component in the wooden mold 10 should include 80 wt. % to 99 wt. % of water-soluble bifunctional acrylic resin and 1 wt. % to 20 wt. % of trifunctional or higher-functional acrylic resin.

Curing the impregnated resin component including the water-soluble bifunctional acrylic resin and the trifunctional or higher-functional acrylic resin forms a three-dimensional cross-linking structure or complex mesh structure. The three-dimensional cross-linking structure of the impregnated resin component is likely to be securely caught by the internal tissues of the wood board 1, thereby making the impregnated resin component water-insoluble. The three-dimensional cross-linking structure of the impregnated resin component can prevent the impregnated resin component from being flown into moisture.

Curing the impregnated resin component including the water-soluble bifunctional acrylic resin only does not form any three-dimensional cross-linking structure or complex mesh structure, thereby making the impregnated resin component water-soluble. No three-dimensional cross-linking structure or complex mesh structure allows the impregnated resin component to be flown into moisture.

The method of forming the wooden mold 10 includes the deformation process and the curing process. The deformation process deforms the resin-impregnated wood board 4 to provide the intended three-dimensional shape. The curing process cures the deformed resin-impregnated wood board 4 to define the deformed three-dimensional shape. The combination of the deformation and the curing processes can produce the wooden mold 10 having the intended three-dimensional shape.

The curing process can be carried out at the same time when the deformation process is carried out thereby shortening the time to produce the wooden mold 10, even the curing process can be carried out after the deformation process is carried out. The deforming process applies mechanical stress to the resin-impregnated wood board 4. The curing process forms the three-dimensional cross-linking structure or complex mesh structure. The three-dimensional cross-linking structure or complex mesh structure improves mechanical strength to the resin-impregnated wood board 4. Namely, the three-dimensional cross-linking structure or complex mesh structure reinforces the resin-impregnated wood board 4. The three-dimensional cross-linking structure or complex mesh structure can prevent the resin-impregnated wood board 4 from being cracked by a mechanical stress applied during the deformation process.

A typical example of the thickness of the wood board 1 may be ranged from 0.1mm to 1mm to provide high flexibility to the wood board 1. Highly flexibility of the resin-impregnated wood board 4 makes it easy to deform or bend the resin-impregnated wood board 4. Highly flexibility of the resin-impregnated wood board 4 can prevent the resin-impregnated wood board 4 from being cracked by the mechanical stress applied during the deformation process. Highly flexibility of the resin-impregnated wood board 4 can improve the yield. The thickness in the range of 0.1 mm to 1mm may prevent the wooden mold 10 from being transparent but may provide good appearance to the wooden mold 10.

As described above, the resin solution 3 includes both the resin component and the curing agent so as to reduce the number of necessary processes, even a resin solution free of any curing agent can be used before the curing agent is used in a separate process.

As described above, the number average molecular weight of the water-soluble bifunctional acrylic resin may be ranged from 300 to 2500 so as to make it easy to disperse the water-soluble bifunctional acrylic resin uniformly in the resin solution 3. This resin solution 3 is easy to be impregnated into the fiber clearances and/or cell walls of the wood board 1. Sufficient impregnation of the resin solution 3 into the fiber clearances and/or cell walls swells the resin-impregnated wood board 4, before the impregnated resin component is then cured, thereby improving the moisture resistance, the flexibility, and the filling property.

As described above, the content of trifunctional or higher-functional acrylic resin in the resin component may be ranged from 1 wt. % to wt. 20%. This content of trifunctional or higher-functional acrylic resin may allow uniform dispersion of the trifunctional or higher-functional acrylic resin into the resin solution 3. This content of trifunctional or higher-functional acrylic resin may further allow that curing the resin component forms the three-dimensional cross-linking structure or complex mesh structure. The structure can prevent the impregnated resin component from being flown into moisture.

As described above, the wooden mold 10 has the flat main central portion 10b and the opposing side portions 10a that extend from the main central portion 10b and are curved or bent toward the same direction. This shape of the wooden mold 10 is just an example but may be modified in any three-dimensional shape.

Second Embodiment:

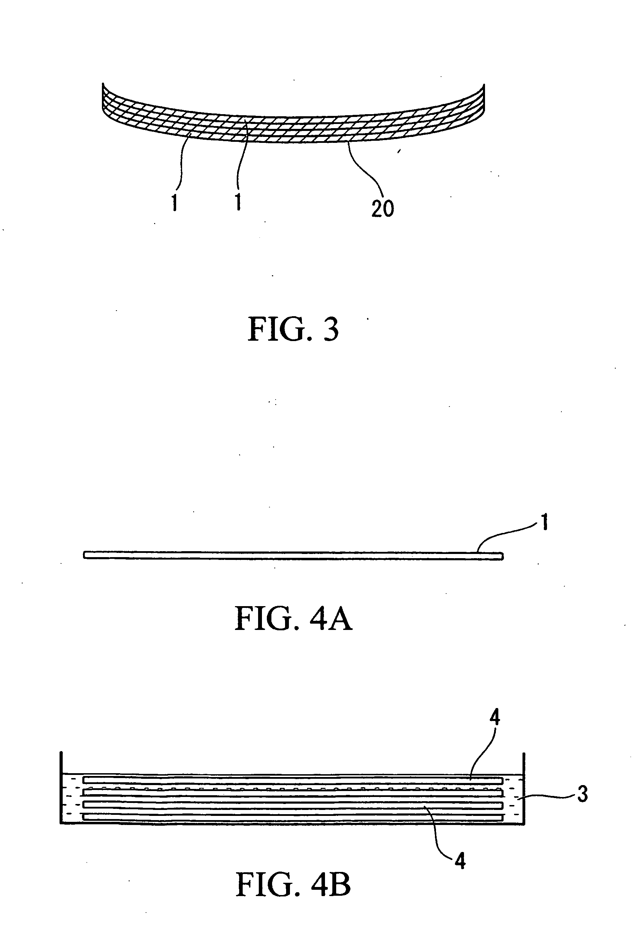

FIG 3 is a schematic cross sectional elevation view illustrating another example of a wooden structure in accordance with a second embodiment of the present invention. FIGS. 4A and 4B are schematic cross sectional views illustrating wooden molds in sequential steps involved in a method of producing the wooden structure shown in FIG 3. The wooden structure can be realized by or may include, but not limited to, a wooden mold 20.

As shown in FIG 3, the wooden mold 20 has a stack structure that has plural wood boards 1. Each wood board 1 may be gently curved or arched. The wood boards 1 may be made of the same material as the wood board 1 that is used in the above-described first embodiment. The number of the laminated wood boards 1 should not be limited. In a case, four wood boards 1 may be laminated to from a stack structure as illustrated in FIG 3.

A plurality of wood boards 1 is prepared. Each of the wood boards 1 is illustrated in FIG 4A. The plurality of wood boards 1 is laminated so that the grain directions of two adjacent wood boards are perpendicular to each other. For example, four wood boards 1 may be laminated. The plurality of wood boards 1 may be laminated with or without conducting a pretreatment thereof. Typical examples of the pretreatment may include, but are not limited to, bleaching, dying processes, and alkali treatment. The stack of the wood boards 1 is then dipped into a resin solution 3 so as to impregnate the resin solution into the stack of the wood boards 1, thereby producing a stack of resin-impregnated wood boards 4. The resin solution 3 is impregnated from the surface of the laminated wood boards 1 into fiber clearances and cell walls thereof, thereby swelling the laminated resin-impregnated wood boards 4. The stack of the resin-impregnated wood boards 4 has high flexibility that makes it easy to bend the stack.

The resin solution 3 may be the same as that described in the first embodiment. Duplicate descriptions of the resin solution 3 will be omitted.

As described above, the plural wood boards 1 are laminated to form a stack of the plural wood boards 1 before the stack is then dipped into the resin solution 3. However, it is also possible as a modification that plural separate wood boards 1 are dipped into the resin solution 3 to form plural separate resin-impregnated wood boards 4. The plural separate resin-impregnated wood boards 4 are then dried in the same manner as that described in the first embodiment.

The plurality of dried resin-impregnated wood boards 4 is laminated so that the grain directions of two adjacent wood boards are perpendicular to each other, thereby forming a stack of the resin-impregnated wood boards 4. The stack of the resin-impregnated wood boards 4 is then subjected to a hot press process. The hot press process deforms the dried resin-impregnated wood board 4 thereby providing an intended three-dimensional shape thereto, while curing the resin component of the dried resin-impregnated wood boards 4 thereby defining the deformed shape of the dried resin-impregnated wood boards 4. The deformation and curing of the dried resin-impregnated wood boards 4 forms the wooden mold 20 with the intended three-dimensional shape. As described above and shown in FIG 3, the wooden mold 20 may be gently curved or arched.

The hot press process can, for example, be carried out under the pressure of 0.1MPa to 3MPa at a temperature of 80°C to 150°C for 1 minute to 10 minutes.

In some cases, the resin solution 3 may include a resin component, a curing agent, a surfactant, and water. The resin component includes at least a water-soluble bifunctional acrylic resin and at least a trifunctional or higher-functional acrylic resin. The resin solution 3 is impregnated into the wood boards 1, thereby forming the resin-impregnated wood boards 4. The resin component of the resin-impregnated wood boards 4 is then cured. The resin solution 3 contains the resin component which includes, but is not limited to, the water-soluble bifunctional acrylic resin and the trifunctional or higher-functional acrylic resin. The resin-impregnated wood boards 4 are deformed and the resin component in the resin-impregnated wood boards 4 is cured, thereby producing the wooden mold 20. The wooden mold 20 contains the resin component that includes, but is not limited to, the water-soluble bifunctional acrylic resin and the trifunctional or higher-functional acrylic resin. The resin component including the water-soluble bifunctional acrylic resin and the trifunctional or higher-functional acrylic resin will provide superior dimensional stability and moisture resistance to the wooden mold 20.

As described above, the resin-impregnated wood boards 4 are laminated so that the grain directions of two adjacent wood boards are perpendicular to each other. The difference in the grain directions between the two adjacent wood boards may improve the uniformity in the mechanical strength, the crack-stability, and the dimensional stability. The wooden mold 20 includes the stack of the resin-impregnated wood boards 4 with the different grain directions. The wooden mold 20 is higher in the crack-stability and the dimensional stability than another wooden mold that includes another stack of wood boards wherein the grain directions thereof are the same. The wooden mold 20 is also higher in the crack-stability and the dimensional stability than still another wooden mold that includes a single wood board that have the same thickness of the wooden mold 20.

The number of the laminated wood boards 1 should not be limited. The number of the laminated wood boards 1 may be decided by taking into account applications of the wooden mold 20.

Third Embodiment:

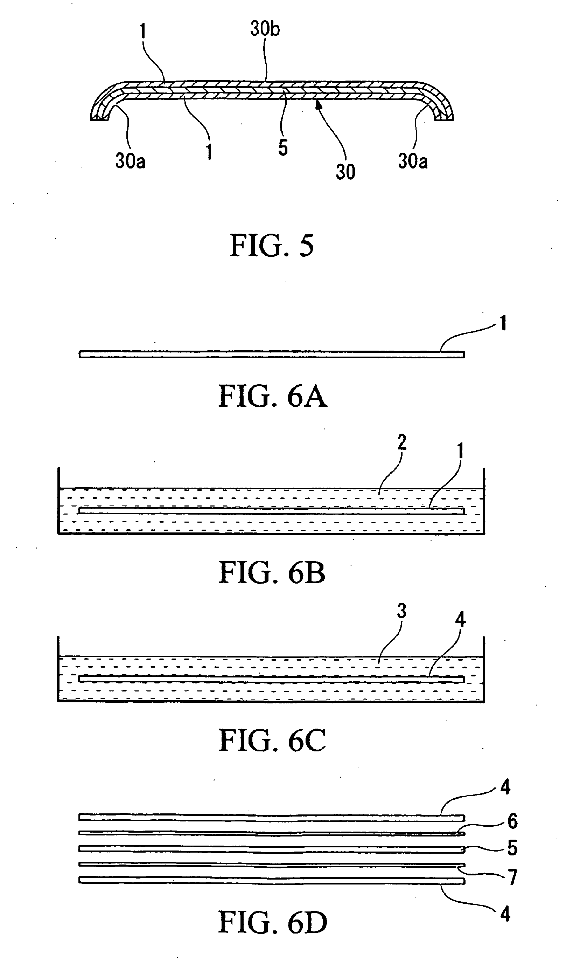

FIG 5 is a schematic cross sectional elevation view illustrating still another example of a wooden structure in accordance with a third embodiment of the present invention. FIGS. 6A through 6D are schematic cross sectional views illustrating wooden molds in sequential steps involved in a method of producing the wooden structure shown in FIG 5. The wooden structure can be realized by or may include, but not limited to, a wooden mold 30:

As shown in FIG 5, the wooden mold 30 has a main central portion 30b and opposing side portions 30a that extend from the main central portion 30b. The main central portion 30b is flat, while the opposing side portions 30a are curved or bent toward the same direction. The wooden mold 30 has a stack structure that has two wood boards 1 and a single built-in backup board 5. The single built-in backup board 5 is sandwiched between the two wood boards 1.

Two non-deformed wood boards 1 are prepared, each of which is illustrated in FIG 6A. The wood boards 1 may be made of the same material as the wood board 1 that is used in the above-described first embodiment.

As shown in FIG 6B, the wood boards 1 may be pretreated prior to the use thereof. Typical examples of the pretreatment may include, but are not limited to, bleaching, dying processes, and alkali treatment. In a typical case, each wood board 1 may be dipped in a treatment solution 2. Typical examples of the treatment solution 2 may include, but are not limited to, a bleacher-containing solution and a water-based paint. The treatment solution 2 may preferably be water-soluble. Using a water-soluble treatment solution allows that a resin solution is impregnated into each wood board 1, without drying the water-soluble treatment solution. In other words, using the water-soluble treatment solution allows that immediately after each wood board 1 is pretreated with the water-soluble treatment solution, a resin solution is impregnated into each wood board 1 without drying the water-soluble treatment solution. Thus, using the water-soluble treatment solution may shorten the time for processing the wood board 1.

As shown in FIG 6C, each pretreated wood board 1 is then dipped into a resin solution 3 so as to impregnate the resin solution 3 into each wood board 1, thereby producing a resin-impregnated wood board 4. Two resin-impregnated wood boards 4 are prepared in this manner. The resin solution 3 is impregnated from the surface of each wood board 1 into fiber clearances and cell walls thereof, thereby swelling each resin-impregnated wood board 4. Each resin-impregnated wood board 4 has a higher flexibility than the wood board 1. Each resin-impregnated wood board 4 with high flexibility is easy to be bent. Thus, two resin-impregnated wood boards 4 are prepared. The resin solution 3 used in this embodiment may be the same as that described in the first embodiment.

The resin-impregnated wood boards 4 may then be dried in the same manner as described in the first embodiment. Namely, the drying process may be carried out by placing the resin-impregnated wood boards 4 in an atmosphere at the ordinary temperature for a few hours so that the resin-impregnated wood boards 4 are approximately half-dried.

Drying the resin-impregnated wood boards 4 can prevent that the resin solution 3 is dripped from the resin-impregnated wood boards 4 and also that the resin solution 3 is seeped out of the resin-impregnated wood boards 4.

As shown in FIG 6D, two adhesive sheets 6 and 7 and a built-in backup board 5 are prepared. The adhesive sheet 7 is laminated on the first one of the two resin-impregnated wood boards 4. The built-in backup board 5 is laminated on the adhesive sheet 7. The adhesive sheet 6 is laminated on the built-in backup board 5. The second one of the two resin-impregnated wood boards 4 is laminated on the adhesive sheet 6, thereby forming a stack structure. In other words, the built-in backup board 5 is sandwiched between the adhesive sheets 6 and 7. The built-in backup board 5 and the adhesive sheets 6 and 7 are sandwiched between the two resin-impregnated wood boards 4. In a case, the two resin-impregnated wood boards 4 may have the same grain direction.

The stack structure is then subjected to a hot press process. The hot press process deforms the stack structure thereby providing an intended three dimensional shape thereto, while curing the resin component of the dried resin-impregnated wood boards 4 of the stack structure thereby defining the deformed shape of the stack structure. The deformation and curing of the stack structure forms the wooden mold 30 with the intended three-dimensional shape. As described above and shown in FIG 5, the wooden mold 30 has the main central portion 30b and opposing side portions 30a that extend from the main central portion 30b. The main central portion 30b is flat, while the opposing side portions 30a are curved or bent toward the same direction.

The built-in backup board 5 is used to reinforce the wooden mold 30. In other words, the built-in backup board 5 can be realized by a material that reinforces the wooden mold 30. Typical examples of the built-in backup board 5 may include, but are not limited to, an aluminum sheet, a non-woven fabric such as a polyester sheet, a woven fabric, a resin-impregnated glass fiber, and a wooden stack.

The adhesive sheets 6 and 7 are used to provide adhesions between the two resin-impregnated wood boards 4 and the built-in backup board 5. In other words, the adhesive sheets 6 and 7 may be realized by a sheet that provides an adhesion between the resin-impregnated wood board 4 and the built-in backup board 5. Typical examples of the adhesive sheets 6 and 7 may include, but are not limited to, a phenolic-adhesive sheet or a melamine-resin-adhesive sheet.

The hot press process can, for example, be carried out under the pressure of 0.1 MPa to 3 MPa at a temperature of 80°C to 150°C for 1 minute to 10 minutes.

In some cases, the resin solution 3 may include a resin component, a curing agent, a surfactant, and water. The resin component includes at least a water-soluble bifunctional acrylic resin and at least a trifunctional or higher-functional acrylic resin. The resin solution 3 is impregnated into the wood boards 1, thereby forming the resin-impregnated wood boards 4. The resin component of the resin-impregnated wood boards 4 is then cured. The resin solution 3 contains the resin component which includes, but is not limited to, the water-soluble bifunctional acrylic resin and the trifunctional or higher-functional acrylic resin. The resin-impregnated wood boards 4 are deformed and the resin component in the resin-impregnated wood boards 4 is cured, thereby producing the wooden mold 30. The wooden mold 30 contains the resin component that includes, but is not limited to, the water-soluble bifunctional acrylic resin and the trifunctional or higher-functional acrylic resin. The resin component including the water-soluble bifunctional acrylic resin and the trifunctional or higher-functional acrylic resin will provide superior dimensional stability and moisture resistance to the wooden mold 30.

The built-in backup board 5 is provided between the two resin-impregnated wood boards 4. The built-in backup board 5 reinforces the wooden mold 30. The wooden mold 30 has increased strength and rigidity.

As described above, the adhesive sheets 6 and 7 are used to provide adhesions between the two resin-impregnated wood boards 4 and the built-in backup board 5. It is possible as a modification to apply an adhesive agent between the two resin-impregnated wood boards 4 and the built-in backup board 5, without using the adhesive sheets 6 and 7. Typical examples of the adhesive agent may include, but are not limited to, a urethane adhesive agent, an epoxy adhesive agent, and a silicone adhesive agent. The built-in backup board 5 can be made of a material that provides adhesion with the resin-impregnated wood boards 4 by the deformation and curing processes, without using the adhesive sheets 6 and 7.

As described above, the two wood boards 1 and the single built-in backup board 5 are used. The numbers of the wood boards 1 and the built-in backup board 5 should not be limited but should be decided taking into account the application of the wooden mold 30.

As described above, the two resin-impregnated wood boards 4 are disposed so that the grain directions are the same between the two resin-impregnated wood boards 4. In other cases, the two resin-impregnated wood boards 4 may be disposed so that grain directions thereof are perpendicular to each other.

Fourth Embodiment:

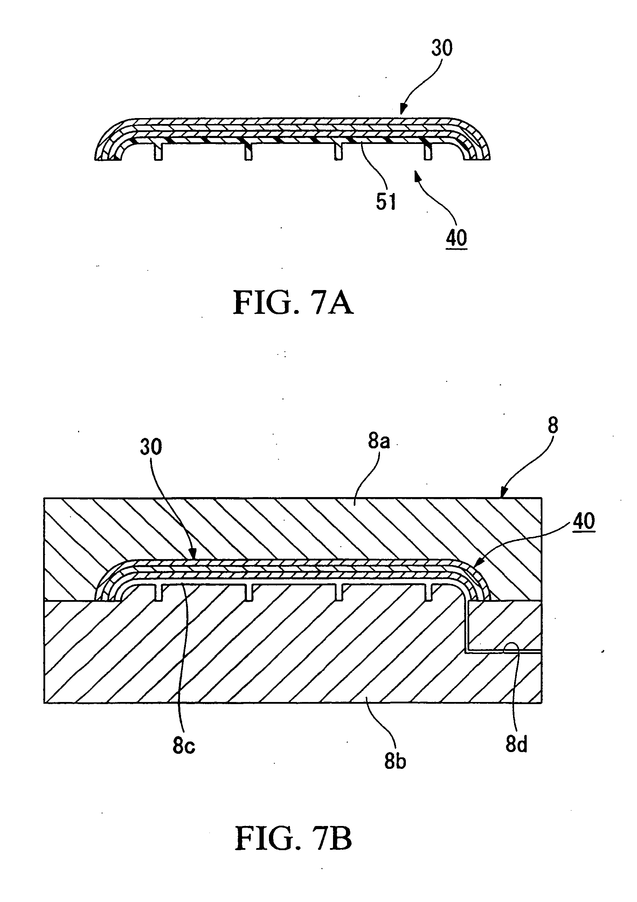

FIG 7A is a schematic cross sectional elevation view illustrating still another example of a wooden structure for vehicle interior in accordance with a fourth embodiment of the present invention. FIG 7B is a schematic cross sectional elevation view illustrating the wooden structure for vehicle interior in one step involved in a method of forming the wooden structure of FIG 7A. The wooden structure can be realized by, but not limited to, a wooden product 40.

As shown in FIG 7A, the wooden product 40 for vehicle interior may include a wooden mold 30 and an optional backup board 51. The wooden mold 30 of this embodiment is the same as that described in the third embodiment with reference to FIG 5. Namely, the wooden mold 30 has a main central portion 30b and opposing side portions 30a that extend from the main central portion 30b. The main central portion 30b is flat, while the opposing side portions 30a are curved or bent toward the same direction. The wooden mold 30 has a stack structure that has two wood boards 1 and a single built-in backup board 5. The single built-in backup board 5 is sandwiched between the two wood boards 1. The wooden mold 30 has first and second opposing surfaces. The opposing side portions 30a are curved or bent toward the direction in which the first surface of the wooden mold 30 faces.

The optional backup board 51 is disposed on the first surface of the wooden mold 30. The optional backup board 51 may be made of a resin. In this case, the resin optional backup board 51 may be formed by using a known injection molding process. The injection molding process may be carried out using dies 8 such as top and bottom dies 8a and 8b. When the top and bottom dies 8a and 8b are combined together, a cavity 8c is formed between the top and bottom dies 8a and 8b. The cavity 8c has a shape that corresponds to an external shape of the wooden product 40 for vehicle interior. The bottom die 8b has an injection flow path 8d that communicates with the cavity 8c. A molten resin is injected through the injection flow path 8d into the cavity 8c, while the top and bottom dies 8a and 8b being combined together.

The resin material for the optional backup board 51 may be any resin that can be used for injection molding. Typical examples of the resin may include, but are not limited to, olefin resins, acrylic resins, styrene resins, ABS resins, polyamide resins such as nylon, polycarbonate resins, and polysilastylene resins. Other typical examples of the resin may include, but are not limited to, glass fiber reinforced resins which are prepared by mixing glass fibers in those resins.

In some cases, the optional backup board 51 may be formed on the first surface of the wooden mold 30 by using the dies 8 shown in FIG 7B. The wooden mold 30 shown in FIG 5 is prepared in the same manner as described in the third embodiment. The wooden mold 30 is placed in the cavity 8a of the dies 8. A molten resin is injected through the injection flow path 8d into the cavity 8c so that the injected molten resin contacts with the first surface of the wooden mold 30 in the cavity 8c. The injected molten resin is then solidified in the cavity 8c, thereby forming the optional backup board 51 on the first surface of the wooden mold 30 in the cavity 8c.

In other cases, the optional backup board 51 may also be formed on the first surface of the wooden mold 30 by using a foaming process. In this case, the optional backup board 51 may be made of a known foaming process. In other words, the optional backup board 51 may be made of a foaming resin that is prepared by a known foaming process.

The wooden product 40 for vehicle interior includes the wooden mold 30. As described in the first embodiment, the wooden mold 30 has the improved dimensional stability and moisture-resistance. Thus, the wooden product 40 for vehicle interior also has the improved dimensional stability and moisture-resistance.

The wooden product 40 for vehicle interior further includes the optional backup board 51 that is combined with the wooden mold 30. The optional backup board 51 reinforces the mechanical strength of the wooden product 40 for vehicle interior.

Fifth Embodiment:

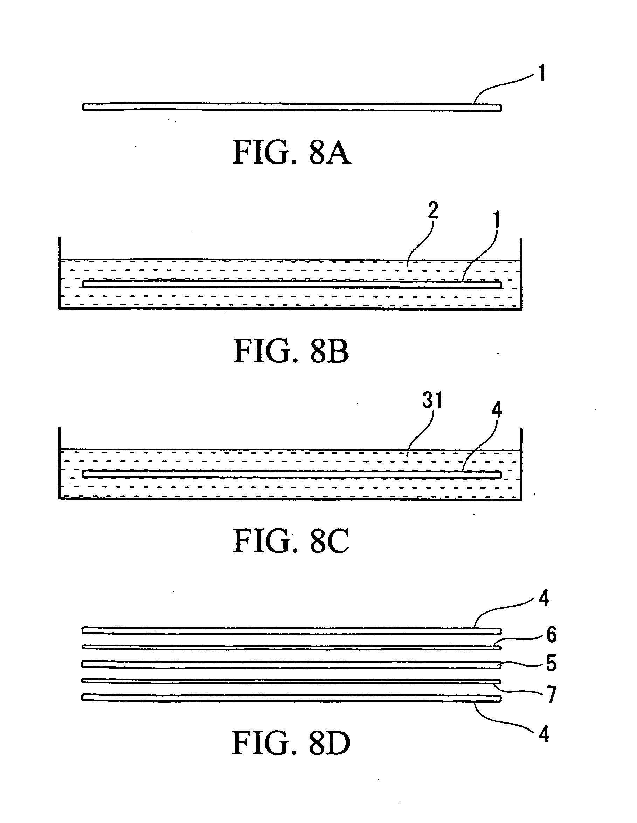

FIGS. 8A through 8D are schematic cross sectional elevation views illustrating wooden molds in sequential steps involved in another method of producing the wooden mold shown in FIG 5 in accordance with a fifth embodiment of the present invention.

The present embodiment is different from the third embodiment in the method of producing the wooden mold 30. The following descriptions will be focused on the method of producing the wooden mold 30, while omitting the duplicate descriptions about the structure of the wooden mold 30.

Two non-deformed wood boards 1 are prepared, each of which is illustrated in FIG 8A. The wood boards 1 may be made of the same material as the wood board 1 that is used in the above-described first embodiment. The wood boards 1 may be pretreated prior to the use thereof. Typical examples of the pretreatment may include, but are not limited to, bleaching, dying processes, and alkali treatment.

As shown in FIG 8B, in a typical case, each wood board 1 may be dipped in a treatment solution 2 which may be the same as that used in the above-described first embodiment. Typical examples of the treatment solution 2 may include, but are not limited to, a bleacher-containing solution and a water-based paint. The treatment solution 2 may preferably be water-soluble. Using a water-soluble treatment solution allows that a resin solution is impregnated into each wood board 1, without drying the water-soluble treatment solution. In other words, using the water-soluble treatment solution allows that immediately after each wood board 1 is pretreated with the water-soluble treatment solution, a resin solution is impregnated into each wood board 1 without drying the water-soluble treatment solution. Thus, using the water-soluble treatment solution may shorten the time for processing the wood board 1.

As shown in FIG 8C, each pretreated wood board 1 is then dipped into a resin solution 31 so as to impregnate the resin solution 31 into each wood board 1, thereby producing a resin-impregnated wood board 4. Two resin-impregnated wood boards 4 are prepared in this manner. The resin solution 31 is different from the above-described resin solution 3. The resin solution 31 includes the same resin component as the resin solution 3, the surfactant and water. The resin solution 31 is free of any curing agent. The resin component of the resin solution 31 includes at least a water-soluble bifunctional acrylic resin and at least a trifunctional or higher-functional acrylic resin. Typical examples of the water-soluble bifunctional acrylic resin may be the same as those described in the first embodiment. Typical examples of the trifunctional or higher-functional acrylic resin may be the same as those described in the first embodiment.

The resin solution 31 is impregnated from the surface of each wood board 1 into fiber clearances and cell walls thereof, thereby swelling each resin-impregnated wood board 4. Each resin-impregnated wood board 4 has higher flexibility than the wood board 1. Each resin-impregnated wood board 4 with high flexibility is easy to be bent. Thus, two resin-impregnated wood boards 4 are prepared.

The resin-impregnated wood boards 4 may then be dried in the same manner as described in the first embodiment. Namely, the drying process may be carried out by placing the resin-impregnated wood boards 4 in an atmosphere at the ordinary temperature for a few hours so that the resin-impregnated wood boards 4 are approximately half-dried.

Drying the resin-impregnated wood boards 4 can prevent that the resin solution 3 is dripped from the resin-impregnated wood boards 4 and also that the resin solution 3 is seeped out of the resin-impregnated wood boards 4.

A curing solution that contains at least a curing agent is prepared. The curing solution is impregnated into each resin-impregnated wood board 4. The curing solution may be prepared by diluting a curing agent with a solvent. The curing agent may be the same as that described in the first embodiment. The solvent may be realized by any available solvent that may cause uniform dispersion of the curing agent and may not inhibit the curing reaction of the resin component. Typical examples of the solvent may include, but are not limited to, water, methanol, ethanol, acetone, and toluene.

The concentration of the curing agent in the curing solution may be decided by considering that the curing solution can cure the resin component of the resin-impregnated wood boards 4. The concentration of the curing agent in the curing solution may be optional as long as the curing solution can cure the resin component of the resin-impregnated wood boards 4. The concentration may, for example, be decided by taking into account the amount of the curing solution.

Typical examples of the curing solution may include, but are not limited to, ethanol solution containing 1% of 2,2 'azobis(2-methyl-N(hydroxyethyl)propionamide.

The method of impregnating the curing solution into the resin-impregnated wood boards 4 may be realized by applying the curing solution onto the resin-impregnated wood boards 4. Typical example of applying the curing solution onto the resin-impregnated wood boards 4 may be brushing or spraying. The method of impregnating the curing solution into the resin-impregnated wood boards 4 may also be realized by dipping the resin-impregnated wood boards 4 into the curing solution. The method of impregnating the curing solution into the resin-impregnated wood boards 4 may also be realized by a vacuum impregnation.

Dipping the resin-impregnated wood boards 4 into the curing solution or the vacuum impregnation for a long time may cause the impregnated resin component to be eluted into the curing solution. Dipping the resin-impregnated wood boards 4 into the curing solution or the vacuum impregnation may preferably be carried out for a limited period of time so as to avoid eluting the impregnated resin component into the curing solution. A typical example of the limited period of time may be within a few minutes.

As shown in FIG 8D, two adhesive sheets 6 and 7 and a built-in backup board 5 are prepared. The adhesive sheet 7 is laminated on the first one of the two resin-impregnated wood boards 4. The built-in backup board 5 is laminated on the adhesive sheet 7. The adhesive sheet 6 is laminated on the built-in backup board 5. The second one of the two resin-impregnated wood boards 4 is laminated on the adhesive sheet 6, thereby forming a stack structure. In other words, the built-in backup board 5 is sandwiched between the adhesive sheets 6 and 7. The built-in backup board 5 and the adhesive sheets 6 and 7 are sandwiched between the two resin-impregnated wood boards 4. In a case, the two resin-impregnated wood boards 4 may have the same grain direction.

The stack structure is then subjected to a hot press process. The hot press process deforms the stack structure thereby providing an intended three dimensional shape thereto, while curing the resin component of the dried resin-impregnated wood boards 4 of the stack structure thereby defining the deformed shape of the stack structure. The deformation and curing of the stack structure forms the wooden mold 30 with the intended three-dimensional shape. As described above and shown in FIG 5, the wooden mold 30 has the main central portion 30b and opposing side portions 30a that extend from the main central portion 30b. The main central portion 30b is flat, while the opposing side portions 30a are curved or bent toward the same direction.

The built-in backup board 5 is used to reinforce the wooden mold 30. In other words, the built-in backup board 5 can be realized by a material that reinforces the wooden mold 30. Typical examples of the built-in backup board 5 may include, but are not limited to, an aluminum sheet, a non-woven fabric such as a polyester sheet, a woven fabric, a resin-impregnated glass fiber, and a wooden stack.

The adhesive sheets 6 and 7 are used to provide adhesions between the two resin-impregnated wood boards 4 and the built-in backup board 5. In other words, the adhesive sheets 6 and 7 may be realized by a sheet that provides an adhesion between the resin-impregnated wood board 4 and the built-in backup board 5. Typical examples of the adhesive sheets 6 and 7 may include, but are not limited to, a phenolic-adhesive sheet or a melamine-resin-adhesive sheet.

The hot press process can, for example, be carried out under the pressure of 0.1 MPa to 3 MPa at a temperature of 80°C to 150°C for 1 minute to 10 minutes.

Whereas the above-described curing solution is used, the resin solution 3 can be used instead of the resin solution 31 which is free of any curing agent. The resin solution 3 may be used, which include a resin component, a curing agent, a surfactant, and water. The resin component includes at least a water-soluble bifunctional acrylic resin and at least a trifunctional or higher-functional acrylic resin. The resin solution 3 is impregnated into the wood boards 1, thereby forming the resin-impregnated wood boards 4. The above-described curing solution may, if necessary, be impregnated into the resin-impregnated wood boards 4. The resin-impregnated wood boards 4 are deformed and the resin component in the resin-impregnated wood boards 4 is cured, thereby producing the wooden mold 30. The wooden mold 30 contains the resin component that includes, but is not limited to, the water-soluble bifunctional acrylic resin and the trifunctional or higher-functional acrylic resin. The resin component including the water-soluble bifunctional acrylic resin and the trifunctional or higher-functional acrylic resin will provide superior dimensional stability and moisture resistance to the wooden mold 30.

The built-in backup board 5 is provided between the two resin-impregnated wood boards 4. The built-in backup board 5 reinforces the wooden mold 30. The wooden mold 30 has increased strength and rigidity.

As described above, the adhesive sheets 6 and 7 are used to provide adhesions between the two resin-impregnated wood boards 4 and the built-in backup board 5. It is possible as a modification to apply an adhesive agent between the two resin-impregnated wood boards 4 and the built-in backup board 5, without using the adhesive sheets 6 and 7. Typical examples of the adhesive agent may include, but are not limited to, a urethane adhesive agent, an epoxy adhesive agent, and a silicone adhesive agent. The built-in backup board 5 can be made of a material that provides adhesion with the resin-impregnated wood boards 4 by the deformation and curing processes, without using the adhesive sheets 6 and 7.

As described above, the two wood boards 1 and the single built-in backup board 5 are used. The numbers of the wood boards 1 and the built-in backup board 5 should not be limited but should be decided taking into account the application of the wooden mold 30.

As described above, the resin component of the resin solution 31 includes the water-soluble bifunctional acrylic resin and the trifunctional or higher-functional acrylic resin. The resin solution 31 is impregnated into each wood board 1, thereby producing a resin-impregnated wood board 4. The resin-impregnated wood board 4 is then dried. The curing solution is then applied onto or impregnated into the resin-impregnated wood board 4. The resin-impregnated wood boards 4, the built-in backup board 5, and the adhesive sheets 6 and 7 are stacked as described above, thereby forming the stack structure. The stack structure is then subjected to the hot press process to deform and cure the stack structure, thereby producing the wooden mold 30. The wooden mold 30 has high dimensional stability and moisture resistance.

The resin solution 31 that is free of any curing agent is impregnated into each wood board 1, thereby preparing the resin-impregnated wood board 4. After the dry process, the curing solution is impregnated into the resin-impregnated wood board 4 prior to the stacking process and subsequent hot press process. Using the curing solution separately from the curing-agent-free resin solution 31 can shorten the time between the impregnation of the curing agent into the resin-impregnated wood board 4 and the curing process to cure the resin component. This can prevent the resin component of the resin-impregnated wood board 4 from being cured before the hot press process that deforms the stack structure including the resin-impregnated wood boards 4.

As described above, the curing solution is applied onto or impregnated into the resin-impregnated wood boards 4 before the hot press process is carried out to deform the stack structure and cure the deformed stack structure, thereby producing the wooden mold 30 that has a precise shape.

In a case, the stack structure may be deformed before the curing solution is applied or impregnated into the deformed stack structure. However, the impregnation of the curing solution into the deformed stack structure may cause an unintended further deformation of the deformed stack structure. Namely, the impregnation of the curing solution into the deformed stack structure may deteriorate the accuracy in deforming the stack structure.

Sixth Embodiment:

The present embodiment provides another method of forming a wooden mold to be used for forming the wooden structure 40 for vehicle interior of FIG 7A. The wooden structure for vehicle interior is the same as that shown in FIG 7A. The following descriptions will focus on differences from the third and fourth embodiments, while omitting the duplicate descriptions thereof.

As shown in FIG 7A, the wooden product 40 for vehicle interior may include a wooden mold 30 and an optional backup board 51. The stack structure and the optional backup board 51 may be prepared separately from each other. Then, the stack structure and the optional backup board 51 are combined together, thereby producing the wooden product 40 for vehicle interior.

The optional backup board 51 may be made of a resin material. In this case, the optional backup board 51 can be formed by an injection molding technique using dies.

A stack structure is prepared in the same manner as described with reference to FIGS. 6A through 6D. Namely, each resin-impregnated wood boards 4 is prepared in the same manner as described with reference to FIGS. 6A through 6C. Two adhesive sheets 6 and 7 and a built-in backup board 5 are further prepared. As shown in FIG 6D, the adhesive sheet 7 is laminated on the first one of the two resin-impregnated wood boards 4. The built-in backup board 5 is laminated on the adhesive sheet 7. The adhesive sheet 6 is laminated on the built-in backup board 5. The second one of the two resin-impregnated wood boards 4 is laminated on the adhesive sheet 6, thereby forming a stack structure. In other words, the built-in backup board 5 is sandwiched between the adhesive sheets 6 and 7. The built-in backup board 5 and the adhesive sheets 6 and 7 are sandwiched between the two resin-impregnated wood boards 4. In a case, the two resin-impregnated wood boards 4 may have the same grain direction.

The stack structure is then placed in contact with the optional backup board 51. The stack structure is deformed along the shape of the optional backup board 51 and adhered to the optional backup board 51, while curing the resin component of the two resin-impregnated wood boards 4 that are included in the stack structure, thereby producing the wooden product 40 for vehicle interior. This deformation-adhesion-curing process can be carried out by a press process or an ironing process.

The adhesion between the stack structure and the optional backup board 51 can be carried out by using an adhesive agent or an adhesive sheet. Typical examples of the adhesive agent may include, but are not limited to, a urethane adhesive agent, an epoxy adhesive agent, and a silicone adhesive agent. Typical examples of the adhesive sheet may include, but are not limited to, a phenol adhesive sheet, and a melamine adhesive sheet.

The deformation and curing may be performed concurrently or separately. In some cases, the curing process can be carried out at the same time when the deformation process is carried out. In other cases, the curing process can be carried out after the deformation process is carried out.

As described above, in some cases, the optional backup board 51 may be formed by the known injection molding process. In other cases, the optional backup board 51 may be made of a foaming resin which is prepared by a foaming process. In other cases, the optional backup board 51 may be made of a ridged material. Typical examples of the ridged material may include, but are not limited to, metals such as aluminum and magnesium and wooden materials such as wood and plywood. The wooden product 40 for vehicle interior has high dimensional stability and moisture resistance. The optional backup board 51 reinforces the wooden mold 30. The wooden product 40 has increased strength and rigidity.

Seventh Embodiment:

The present embodiment provides still another method of forming a wooden mold to be used for forming the wooden structure 40 for vehicle interior of FIG 7A. The structure of the wooden mold is the same as that shown in FIG 5. The wooden structure for vehicle interior is the same as that shown in FIG 7A. The following descriptions will focus on differences from the third and fourth embodiments, while omitting the duplicate descriptions thereof.

As shown in FIG 7A, the wooden product 40 for vehicle interior may include a wooden mold 30 and an optional backup board 51. The wooden mold 30 and the optional backup board 51 may be prepared separately from each other. Then, the wooden mold 30 and the optional backup board 51 are combined together, thereby producing the wooden product 40 for vehicle interior.

The optional backup board 51 may be made of a resin material. In this case, the optional backup board 51 can be formed by an injection molding technique using dies.

The wooden mold 30 of FIG 5 is prepared in the same matter as described with reference to FIGS. 6A through 6D. A stack structure is prepared in the same manner as described with reference to FIGS. 6A through 6C. Namely, each resin-impregnated wood boards 4 is prepared in the same manner as described with reference to FIGS. 6A through 6C. Two adhesive sheets 6 and 7 and a built-in backup board 5 are further prepared. As shown in FIG 6D, the adhesive sheet 7 is laminated on the first one of the two resin-impregnated wood boards 4. The built-in backup board 5 is laminated on the adhesive sheet 7. The adhesive sheet 6 is laminated on the built-in backup board 5. The second one of the two resin-impregnated wood boards 4 is laminated on the adhesive sheet 6, thereby forming a stack structure. In other words, the built-in backup board 5 is sandwiched between the adhesive sheets 6 and 7. The built-in backup board 5 and the adhesive sheets 6 and 7 are sandwiched between the two resin-impregnated wood boards 4. In a case, the two resin-impregnated wood boards 4 may have the same grain direction.

The stack structure is deformed, while curing the resin component of the two resin-impregnated wood boards 4 that are included in the stack structure, thereby producing the wooden mold 30.

The wooden mold 30 is then combined or adhered with the optional backup board 51. The adhesion between the wooden mold 30 and the optional backup board 51 can be carried out by using an adhesive agent or an adhesive sheet. Typical examples of the adhesive agent may include, but are not limited to, a urethane adhesive agent, an epoxy adhesive agent, and a silicone adhesive agent. Typical examples of the adhesive sheet may include, but are not limited to, a phenol adhesive sheet, and a melamine adhesive sheet.

As described above, in some cases, the optional backup board 51 may be formed by the known injection molding process. In other cases, the optional backup board 51 may be made of a foaming resin which is prepared by a foaming process. In other cases, the optional backup board 51 may be made of a ridged material. Typical examples of the ridged material may include, but are not limited to, metals such as aluminum and magnesium and wooden materials such as wood and plywood. The wooden product 40 for vehicle interior has high dimensional stability and moisture resistance. The optional backup board 51 reinforces the wooden mold 30. The wooden product 40 has increased strength and rigidity.

The wooden mold and the wooden structure of the present invention are superior in moisture-resistance. The wooden mold and the wooden structure can be available to various applications even if the wooden mold and the wooden structure are not coated. Notwithstanding, the wooden mold or the wooden structure may advantageously be coated in order to further improve the moisture resistance.

The wooden mold and the wooden structure of the present invention may be applicable for not only vehicle interior but also other applications. Typical examples of the other application may include, but are not limited to, interiors and exteriors of building materials, acoustic structures, acoustic instruments, and interior or exterior structures of musical instruments. Typical examples of the acoustic structures may include, but are not limited to, vibrating plates which can be used in humid rooms such as bathroom or humid atmospheres. Typical examples of the acoustic instruments may include, but are not limited to, woodwind instruments, stringed instruments, and percussion instruments. Typical examples of the interior or exterior structures of musical instruments may include, but are not limited to, the interior or exterior structures of electric or electronic musical instruments.

In accordance with the foregoing embodiments, the wood board is impregnated with the resin solution to form the resin-impregnated wood board. The resin solution contains the resin component which includes, but is not limited to, at least one water-soluble bifunctional acrylic resin and at least one trifunctional or higher-functional acrylic resin. The resin-impregnated wood board is deformed. The resin component in the resin-impregnated wood board is cured, thereby producing the wooden mold. The wooden mold contains the resin component that includes, but is not limited to, the at least one water-soluble bifunctional acrylic resin and the at least one trifunctional or higher-functional acrylic resin. The resin component including the water-soluble bifunctional acrylic resin and the trifunctional or higher-functional acrylic resin will provide the wooden mold with superior dimensional stability and moisture resistance as well as higher surface-rigidity as compared to when another resin solution is used, which containing a resin component of water-soluble bifunctional resin component only.

The method of forming the wooden mold of the present invention includes the process for deforming the resin-impregnated wood board and the process for curing the resin component that is impregnated in the resin-impregnated wood board. Both the processes for deformation and curing make it possible to obtain a desired three-dimensional shape of the wooden mold.

In general, the reduction in the thickness of the wood board may prevent the wood board from being cracked by the deformation thereof. The reduction in the thickness of the wood board may, however, increase the amount of the resin to be flown out of the resin-impregnated wood board.

In accordance with one aspect of the present invention, the method of forming the wooden mold provides the increased moisture resistance. The increase in the moisture resistance of the resin-impregnated wood board may allow the reduction in the thickness of the wood board while suppressing the impregnated resin from being flown out of the resin-impregnated wood board. The reduction in the thickness of the wood board may increase the flexibility in the three-dimensional shape of the wooden mold. The method of forming the wooden mold may be effective to realize a wooden mold with a desired highly stable three-dimensional shape.

In accordance with one aspect of the present invention, the three-dimensional shape of the deformed resin-impregnated wood board is fixed, while the resin-impregnated wood board has been swelled. This may prevent any undesired variation in the dimensions of the wooden mold due to a possible post-absorption of moisture. This means that the wooden mold has high dimensional stability.

In accordance with one aspect of the present invention, the resin solution contains the resin component which includes the water-soluble bifunctional acrylic resin and the trifunctional or higher-functional acrylic resin. The resin solution can be impregnated into the wood board, thereby swelling the resin-impregnated wood board. This provides high flexibility to the resin-impregnated wood board. The high flexibility may prevent the resin-impregnated wood board from being cracked while the resin-impregnated wood board is deformed. Curing the impregnated resin component including the water-soluble bifunctional acrylic resin and the trifunctional or higher-functional acrylic resin forms a three-dimensional cross-linking structure or complex mesh structure. The three-dimensional cross-linking structure of the impregnated resin component is likely to be securely caught by the internal tissues of the wood board 1, thereby making the impregnated resin component water-insoluble. The three-dimensional cross-linking structure of the impregnated resin component can prevent the impregnated resin component from being flown into moisture. Also, the three-dimensional cross-linking structure of the impregnated resin component improves the formability of the wooden mold.

One aspect of the present invention provides a wooden mold having a desired three dimensional shape, a highly dimensional stability, and a high moisture resistance. Other aspects of the present invention provide wooden structures having a desired three dimensional shape, a highly dimensional stability, and a high moisture resistance. Typical examples of the wooden structures may include, but are not limited to, a wooden structure for vehicle interior and an acoustic wooden structure.

EXAMPLES:

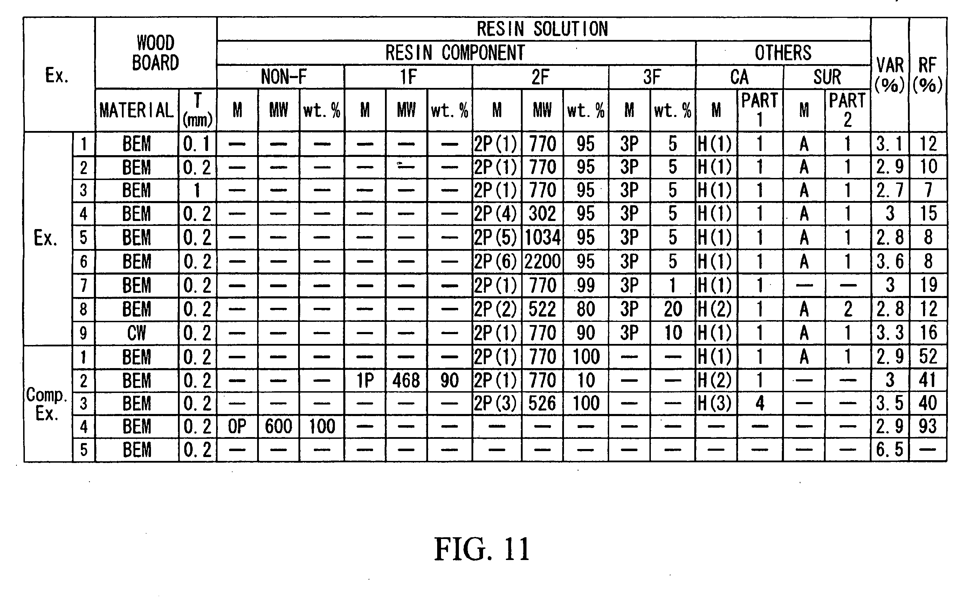

FIG 11 is a table showing Examples 1-9 of the present invention and Comparative Examples 1-5. On the table, T represents the thickness of the wood board. BEM represents birds-eye maple. CW represents claro walnut. NON-F represents that the resin component is free of any functional groups. 1F represents single functional acrylic resin. 2F represents a water-soluble bifunctional acrylic resin. 3F represents trifunctional or higher-functional acrylic resin. CA represents curing agent. SUR represents surfactant. VAR represents the measured dimensional variation of the sample. RF represents the amount of the resin flown out of the sample. M represents the material of a resin. MW represents the molecular weight of the resin material. Wt.% represents percents by weight. PART1 represents parts by weight with reference to 100 parts by weight of the resin component in the resin solution. PART2 represents parts by weight with reference to 100 parts by weight of the resin solution. 0P represents polyethylene glycol (#600). 1P represents polyethylene glycol (#400) monoacrylate. 2P(1) represents polyethylene glycol (#600) dimethacrylate. 2P(2) represents polyethylene glycol (#400) diacrylate. 2P(3) represents polyethylene glycol (#400) diglycidyl ether. 2P(4) represents polyethylene glycol (#200) diacrylate. 2P(5) represents polyethylene glycol (#1000) dimethacrylate. 2P(6) represents polyethylene glycol (#2000) dimethacrylate. 3P represents EO-modified trimethylolpropane triacrylate. H(1) represents 2,2 'azobis(2-methylpropion-amidine) dihydrochloride. H(2) represents 2,2 'azobis(2-methyl-N (hydroxyl ethyl) propionamide). H(3) represents 2-methylimidazole. A represents $C_{12}H_{25}O(CH_2CH_2O)_7H$, namely, polyoxyethylene laurylether.

In Examples 1-9 and Comparative Examples 1-5, the following wood board was prepared. The following resin solution was prepared. The resin solution was impregnated into the wood board under the following conditions. The resin-impregnated wood board was then placed in the atmosphere at the ordinal temperature for 4 hours so as to dry the resin-impregnated wood board. The dried resin-impregnated wood board was then subjected to a hot press process under the following conditions to deform and cure the resin-impregnated wood board, thereby obtaining samples 1-14 in Examples 1-9 and Comparative Examples 1-5, respectively.

The dimensional variations of the samples and the amount of a resin flown out of the samples were investigated as follows.

The dimensional variations of the samples were found as follows. After the samples were subjected to a heat treatment at a temperature of 105°C for at least 6 hours, a dimension R1 of the samples were measured. The dimension R1 is defined in the direction perpendicular to the grain or fiber direction of the samples. After the samples were then placed at a temperature of 30°C and a humidity of 85% for 24 hours, a dimension of the samples were measured. The dimension R2 is defined in the direction perpendicular to the grain or fiber direction of the samples.

The dimensional variation of each sample is given by the following equation.

$$\text{Dimensional Variation (\%)} = \{(R2 - R1)/R1\} \times 100$$

The amount of a resin flown out of each sample is given by the following equation.

$$\text{Resin Amount (\%)} = \{(W1 - W2)/(W1 - W0)\} \times 100$$

"W0" represents the weight of a wood which was measured after the wood was subjected to a heat treatment at a temperature of 105°C for at least 6 hours, without impregnating any resin solution into the wood. "W1" represents the weight of a wood which was measured after the wood was cured and then subjected to a heat treatment at a temperature of 105°C for at least 6 hours. "W2" represents the weight of a wood which was measured after the wood was dipped in water for 24 hours and dried at a temperature of 22°C and a humidity of 60% for 6 hours and then subjected to a heat treatment at a temperature of 105°C for at least 6 hours.

Example 1:

A wood board of birds-eye maple with a thickness of 0.1 mm was prepared. A resin solution was prepared, which includes a resin component, a curing agent and a surfactant. The wood board has a dimension of 80 mm in a grain direction and another dimension of 100 mm in a direction perpendicular to the grain direction.

The resin component in the resin solution includes 95 wt.% of a water-soluble bifunctional acrylic resin, and 5 wt.% of a trifunctional or higher-functional acrylic resin. The water-soluble bifunctional acrylic resin was polyethylene glycol (#600) dimethacrylate having a molecular weight of 770, which is commercially available from Kyoeisha Chemical Co., Ltd. as the product name "light-ester 14EG". The trifunctional or higher-functional acrylic resin was EO-modified trimethylolpropane triacrylate.

The curing agent was 2,2'azobis(2-methylpropion-amidine) dihydrochloride, which is commercially available from Wako Pure Chemical Industries Ltd. as the product name "V-50". The resin solution contains 1 part by weight of the curing agent with reference to 100 parts by weight of the resin component in the resin solution.

The surfactant was $C_{12}H_{25}O(CH_2CH_2O)_7H$, namely polyoxyethylene larylether, which is commercially available from Kyoeisha Chemical Co., Ltd as the product name "AL-7". The resin solution contains 1 part by weight of the surfactant with reference to 100 parts by weight of the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 1.

The measured dimensional variation of the sample 1 was 3.1%. The amount of the resin flown out of the sample 1 was 12%.

Example 2:

A wood board of birds-eye maple with a thickness of 0.2 mm was prepared. A resin solution was prepared, which includes a resin component, a curing agent and a surfactant. The wood board has a dimension of 80 mm in a grain direction and another dimension of 100 mm in a direction perpendicular to the grain direction.

The resin component in the resin solution includes 95 wt.% of a water-soluble bifunctional acrylic resin, and 5 wt.% of a trifunctional or higher-functional acrylic resin. The water-soluble bifunctional acrylic resin was polyethylene glycol (#600) dimethacrylate having a molecular weight of 770, which is commercially available from Kyoeisha Chemical Co., Ltd. as the product name "light-ester 14EG". The trifunctional or higher-functional acrylic resin was EO-modified trimethylolpropane triacrylate.

The curing agent was 2,2'azobis(2-methylpropion-amidine) dihydrochloride, which is commercially available from Wako Pure Chemical Industries Ltd. as the product name "V-50". The resin solution contains 1 part by weight of the curing agent with reference to 100 parts by weight of the resin component in the resin solution.

The surfactant was $C_{12}H_{25}O(CH_2CH_2O)_7H$, namely polyoxyethylene larylether, which is commercially available from Kyoeisha Chemical Co., Ltd as the product name "AL-7". The resin solution contains 1 part by weight of the surfactant with reference to 100 parts by weight of the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 2.

The measured dimensional variation of the sample 2 was 2.9%. The amount of the resin flown out of the sample 2 was 10%.

Example 3:

A wood board of birds-eye maple with a thickness of 1 mm was prepared. A resin solution was prepared, which includes a resin component, a curing agent and a surfactant. The wood board has a dimension of 80 mm in a grain direction and another dimension of 100 mm in a direction perpendicular to the grain direction.

The resin component in the resin solution includes 95 wt.% of a water-soluble bifunctional acrylic resin, and 5 wt.% of a trifunctional or higher-functional acrylic resin. The water-soluble bifunctional acrylic resin was polyethylene glycol (#600) dimethacrylate having a molecular weight of 770, which is commercially available from Kyoeisha Chemical Co., Ltd. as the product name "light-ester 14EG". The trifunctional or higher-functional acrylic resin was EO-modified trimethylolpropane triacrylate.

The curing agent was 2,2'azobis(2-methylpropion-amidine) dihydrochloride, which is commercially available from Wako Pure Chemical Industries Ltd. as the product name "V-50". The resin solution contains 1 part by weight of the curing agent with reference to 100 parts by weight of the resin component in the resin solution.

The surfactant was $C_{12}H_{25}O(CH_2CH_2O)_7H$, namely polyoxyethylene laurylether, which is commercially available from Kyoeisha Chemical Co., Ltd as the product name "AL-7". The resin solution contains 1 part by weight of the surfactant with reference to 100 parts by weight of the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 3.

The measured dimensional variation of the sample 3 was 2.7%. The amount of the resin flown out of the sample 3 was 7%.

Example 4:

A wood board of birds-eye maple with a thickness of 0.2 mm was prepared. A resin solution was prepared, which includes a resin component, a curing agent and a surfactant. The wood board has a dimension of 80 mm in a grain direction and another dimension of 100 mm in a direction perpendicular to the grain direction.

The resin component in the resin solution includes 95 wt.% of a water-soluble bifunctional acrylic resin, and 5 wt.% of a trifunctional or higher-functional acrylic resin. The water-soluble bifunctional acrylic resin was polyethylene glycol (#200) diacrylate having a molecular weight of 302, which is commercially available from Kyoeisha Chemical Co., Ltd. as the product name "light-acrylate 4EG-A". The trifunctional or higher-functional acrylic resin was EO-modified trimethylolpropane triacrylate.

The curing agent was 2,2 'azobis(2-methylpropion-amidine) dihydrochloride, which is commercially available from Wako Pure Chemical Industries Ltd. as the product name "V-50". The resin solution contains 1 part by weight of the curing agent with reference to 100 parts by weight of the resin component in the resin solution.

The surfactant was $C_{12}H_{25}O(CH_2CH_2O)_7H$, namely polyoxyethylene laurylether, which is commercially available from Kyoeisha Chemical Co., Ltd as the product name "AL-7". The resin solution contains 1 part by weight of the surfactant with reference to 100 parts by weight of the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 4.

The measured dimensional variation of the sample 4 was 3%. The amount of the resin flown out of the sample 4 was 15%.

Example 5:

A wood board of birds-eye maple with a thickness of 0.2 mm was prepared. A resin solution was prepared, which includes a resin component, a curing agent and a surfactant. The wood board has a dimension of 80 mm in a grain direction and another dimension of 100 mm in a direction perpendicular to the grain direction.

The resin component in the resin solution includes 95 wt.% of a water-soluble bifunctional acrylic resin, and 5 wt.% of a trifunctional or higher-functional acrylic resin. The water-soluble bifunctional acrylic resin was polyethylene glycol (#1000) dimethacrylate having a molecular weight of 1034. The trifunctional or higher-functional acrylic resin was EO-modified trimethylolpropane triacrylate.

The curing agent was 2,2 'azobis(2-methylpropion-amidine) dihydrochloride, which is commercially available from Wako Pure Chemical Industries Ltd. as the product name "V-50". The resin solution contains 1 part by weight of the curing agent with reference to 100 parts by weight of the resin component in the resin solution.

The surfactant was $C_{12}H_{25}O(CH_2CH_2O)_7H$, namely polyoxyethylene laurylether, which is commercially available from Kyoeisha Chemical Co., Ltd as the product name "AL-7". The resin solution contains 1 part by weight of the surfactant with reference to 100 parts by weight of the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 5.

The measured dimensional variation of the sample 5 was 2.8%. The amount of the resin flown out of the sample 5 was 8%.

Example 6:

A wood board of birds-eye maple with a thickness of 0.2 mm was prepared. A resin solution was prepared, which includes a resin component, a curing agent and a surfactant. The wood board has a dimension of 80 mm in a grain direction and another dimension of 100 mm in a direction perpendicular to the grain direction.

The resin component in the resin solution includes 95 wt.% of a water-soluble bifunctional acrylic resin, and 5 wt.% of a trifunctional or higher-functional acrylic resin. The water-soluble bifunctional acrylic resin was polyethylene glycol (#2000) dimethacrylate having a molecular weight of 2200. The trifunctional or higher-functional acrylic resin was EO-modified trimethylolpropane triacrylate.

The curing agent was 2,2 'azobis(2-methylpropion-amidine) dihydrochloride, which is commercially available from Wako Pure Chemical Industries Ltd. as the product name "V-50". The resin solution contains 1 part by weight of the curing agent with reference to 100 parts by weight of the resin component in the resin solution.

The surfactant was $C_{12}H_{25}O(CH_2CH_2O)_7H$, namely polyoxyethylene laurylether, which is commercially available from Kyoeisha Chemical Co., Ltd as the product name "AL-7". The resin solution contains 1 part by weight of the surfactant with reference to 100 parts by weight of the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 6.

The measured dimensional variation of the sample 6 was 3.6%. The amount of the resin flown out of the sample 6 was 8%.

Example 7:

A wood board of birds-eye maple with a thickness of 0.2 mm was prepared. A resin solution was prepared, which includes a resin component, and a curing agent. However, the resin solution is free of any surfactant. The wood board has a dimension of 80 mm in a grain direction and another dimension of 100 mm in a direction perpendicular to the grain direction.

The resin component in the resin solution includes 99 wt.% of a water-soluble bifunctional acrylic resin, and 1 wt.% of a trifunctional or higher-functional acrylic resin. The water-soluble bifunctional acrylic resin was polyethylene glycol (#600) dimethacrylate having a molecular weight of 770, which is commercially available from Kyoeisha Chemical Co., Ltd. as the product name "light-ester 14EG". The trifunctional or higher-functional acrylic resin was EO-modified trimethylolpropane triacrylate.

The curing agent was 2,2 'azobis(2-methylpropion-amidine) dihydrochloride, which is commercially available from Wako Pure Chemical Industries Ltd. as the product name "V-50". The resin solution contains 1 part by weight of the curing agent with reference to 100 parts by weight of the resin component in the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 7.

The measured dimensional variation of the sample 7 was 3%. The amount of the resin flown out of the sample 7 was 19%.

Example 8:

A wood board of birds-eye maple with a thickness of 0.2 mm was prepared. A resin solution was prepared, which includes a resin component, a curing agent and a surfactant. The wood board has a dimension of 80 mm in a grain direction and another dimension of 100 mm in a direction perpendicular to the grain direction.

The resin component in the resin solution includes 80 wt.% of a water-soluble bifunctional acrylic resin, and 20 wt.% of a trifunctional or higher-functional acrylic resin. The water-soluble bifunctional acrylic resin was polyethylene glycol (#400) diacrylate having a molecular weight of 522, which is commercially available from Kyoeisha Chemical Co., Ltd. as the product name "light-acrylate 9EG-A". The trifunctional or higher-functional acrylic resin was EO-modified trimethylolpropane triacrylate.

The curing agent was 2,2 'azobis(2-methyl-N (hydroxyl ethyl) propionamide), which is commercially available from Wako Pure Chemical Industries Ltd. as the product name "VA-086". The resin solution contains 1 part by weight of the curing agent with reference to 100 parts by weight of the resin component in the resin solution.

The surfactant was $C_{12}H_{25}O(CH_2CH_2O)_7H$, namely polyoxyethylene laurylether, which is commercially available from Kyoeisha Chemical Co., Ltd as the product name "AL-7". The resin solution contains 2 parts by weight of the surfactant with reference to 100 parts by weight of the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 8.

The measured dimensional variation of the sample 8 was 2.8%. The amount of the resin flown out of the sample 8 was 12%.

Example 9:

A wood board of claro walnut with a thickness of 0.2 mm was prepared. A resin solution was prepared, which includes a resin component, a curing agent and a surfactant. The wood board has a dimension of 80 mm in a grain direction and another dimension of 100 mm in a direction perpendicular to the grain direction.

The resin component in the resin solution includes 90 wt.% of a water-soluble bifunctional acrylic resin, and 10 wt.% of a trifunctional or higher-functional acrylic resin. The water-soluble bifunctional acrylic resin was polyethylene glycol (#600) dimethacrylate having a molecular weight of 770, which is commercially available from Kyoeisha Chemical Co., Ltd. as the product name "light-ester 14EG". The trifunctional or higher-functional acrylic resin was EO-modified trimethylolpropane triacrylate.

The curing agent was 2,2 'azobis(2-methylpropion-amidine) dihydrochloride, which is commercially available from Wako Pure Chemical Industries Ltd. as the product name "V-50". The resin solution contains 1 part by weight of the curing agent with reference to 100 parts by weight of the resin component in the resin solution.

The surfactant was $C_{12}H_{25}O(CH_2CH_2O)_7H$, namely polyoxyethylene laurylether, which is commercially available from Kyoeisha Chemical Co., Ltd as the product name "AL-7". The resin solution contains 1 part by weight of the surfactant with reference to 100 parts by weight of the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 9.

The measured dimensional variation of the sample 9 was 3.3%. The amount of the resin flown out of the sample 9 was 16%.

Comparative Example 1:

A wood board of birds-eye maple with a thickness of 0.2 mm was prepared. A resin solution was prepared, which includes a resin component, a curing agent and a surfactant. The wood board has a dimension of 80 mm in a grain direction and another dimension of 100 mm in a direction perpendicular to the grain direction.

The resin component in the resin solution includes 100 wt.% of a water-soluble bifunctional acrylic resin. The resin component is free of any trifunctional or higher-functional acrylic resin. The water-soluble bifunctional acrylic resin was polyethylene glycol (#600) dimethacrylate having a molecular weight of 770, which is commercially available from Kyoeisha Chemical Co., Ltd. as the product name "light-ester 14EG".

The curing agent was 2,2 'azobis(2-methylpropion-amidine) dihydrochloride, which is commercially available from Wako Pure Chemical Industries Ltd. as the product name "V-50". The resin solution contains 1 part by weight of the curing agent with reference to 100 parts by weight of the resin component in the resin solution.

The surfactant was $C_{12}H_{25}O(CH_2CH_2O)_7H$, namely polyoxyethylene laurylether, which is commercially available from Kyoeisha Chemical Co., Ltd as the product name "AL-7". The resin solution contains 1 part by weight of the surfactant with reference to 100 parts by weight of the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 10.

The measured dimensional variation of the sample 10 was 2.9%. The amount of the resin flown out of the sample 10 was 52%.

Comparative Example 2:

A wood board of birds-eye maple with a thickness of 0.2 mm was prepared. A resin solution was prepared, which includes a resin component, and a curing agent. The resin solution is free of any surfactant. The wood board has a dimension of 80 mm in a grain direction and another dimension of 100 mm in a direction perpendicular to the grain direction.

The resin component in the resin solution includes 90 wt.% of a single functional acrylic resin and 10 wt.% of a water-soluble bifunctional acrylic resin. The resin component is free of any trifunctional or higher-functional acrylic resin. The single functional acrylic resin was polyethylene glycol (#400) monoacrylate having a molecular weight of 468. The water-soluble bifunctional acrylic resin was polyethylene glycol (#600) dimethacrylate having a molecular weight of 770, which is commercially available from Kyoeisha Chemical Co., Ltd. as the product name "light-ester 14EG".

The curing agent was 2,2 'azobis(2-methyl-N (hydroxyl ethyl) propionamide), which is commercially available from Wako Pure Chemical Industries Ltd. as the product name "VA-086". The resin solution contains 1 part by weight of the curing agent with reference to 100 parts by weight of the resin component in the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 11.

The measured dimensional variation of the sample 11 was 3%. The amount of the resin flown out of the sample 11 was 41%.

Comparative Example 3:

A wood board of birds-eye maple with a thickness of 0.2 mm was prepared. A resin solution was prepared, which includes a resin component, and a curing agent. The resin solution is free of any surfactant. The wood board has a dimension of 80 mm in a grain direction and another dimension of 100 mm in a direction perpendicular to the grain direction.

The resin component in the resin solution includes 100 wt.% of a water-soluble bifunctional acrylic resin. The resin component is free of any trifunctional or higher-functional acrylic resin. The water-soluble bifunctional acrylic resin was polyethylene glycol (#400) diglycidyl ether having a molecular weight of 526, which is commercially available from Nagase Chemtechs Co., Ltd. as the product name "Denacol EX-830".

The curing agent was 2-methylimidazole, which is commercially available from The Nippon Synthetic Chemical Industry Co., Ltd. The resin solution contains 4 parts by weight of the curing agent with reference to 100 parts by weight of the resin component in the resin solution.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 12.

The measured dimensional variation of the sample 12 was 3.5%. The amount of the resin flown out of the sample 12 was 40%.

Comparative Example 4:

A wood board of birds-eye maple with a thickness of 0.2 mm was prepared. A resin solution was prepared, which includes a resin component. The resin solution is free of any curing agent and any surfactant. The wood board has a dimension of 80 mm in a grain direction and another dimension of 100 mm in a direction perpendicular to the grain direction.

The resin component in the resin solution includes 100 wt.% of polyethylene glycol (#600). The resin component is free of any functional groups.

The wood board was dipped for 30 minutes in the resin solution to impregnate the resin solution into the wood board. The concentration of the resin component as a solid component was 30%.

The resin-impregnated wood board was then placed in an atmosphere at the ordinal temperature for 4 hours so as to dry the resin-impregnated wood board. The dried resin-impregnated wood board was then subjected to a hot press process at 150°C for 6 minutes under 1MPa, to deform and cure the resin-impregnated wood board, thereby obtaining a sample 13.

The measured dimensional variation of the sample 13 was 2.9%. The amount of the resin flown out of the sample 13 was 93%.

Comparative Example 5:

A wood board of birds-eye maple with a thickness of 0.2 mm was prepared. The wood board was not dipped into any resin solution. The wood board is a sample 14. The measured dimensional variation of the sample 14 was 6.5%.

Evaluations:

In each of Examples 1-9, the wood board was dipped into the resin solution that contains both the water-soluble bifunctional acrylic resin, and the trifunctional or higher-functional acrylic resin. The measured dimensional variations of the samples 1-9 of Examples 1-9 were at most 3.6%. In contrast, the measured dimensional variation of the sample 14 in Comparative Example 5 was 6.5%. These demonstrate that dipping the wood board into the resin solution containing both the water-soluble bifunctional and the trifunctional or higher-functional acrylic resins improve the dimensional stability of the samples.

In each of Examples 1-9, the amounts of the resin flown out of the samples 1-9 were less than 20%. In contrast, the amounts of the resin flown out of the samples 10-14 in Comparative Examples 1-5 were at least 40%. These demonstrate that dipping the wood board into the resin solution containing both the water-soluble bifunctional and the trifunctional or higher-functional acrylic resins suppresses the amounts of the resin flown out of the samples.

Example 10:

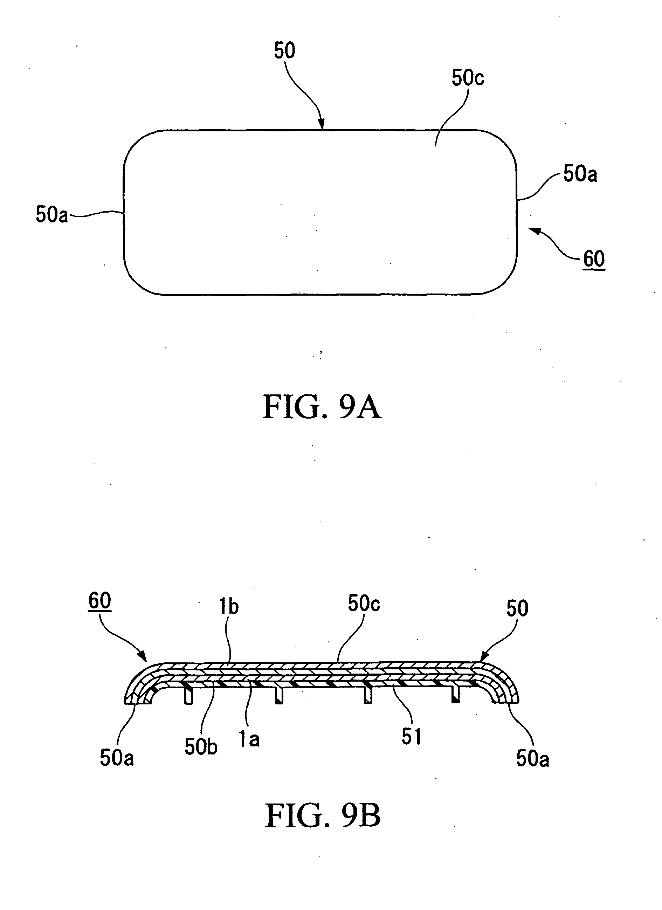

A wooden mold was prepared in the same manner as described in accordance with one aspect of the present invention. A wooden structure including the prepared wooden mold was used to produce a wooden product for vehicle interior. FIG 9A is a plan view illustrating a wooden product for vehicle interior in Example 10 of the present invention. FIG 9B is a cross sectional elevation view illustrating the wooden product for vehicle interior of FIG 9A. A wooden product 60 for vehicle interior was produced as follows.

A resin solution was prepared, which is identical with the above-described resin solution of Example 1. Wood boards 1a and 1b were prepared. The wood boards 1a and 1b were dipped into the resin solution, thereby preparing resin-impregnated wood boards 1a and 1b. The resin-impregnated wood boards 1a and 1b were then dried in the same manner as described in Example 1.

A stacking process was carried out as follows. First and second adhesive sheets and a built-in backup board 5 were prepared. The first adhesive sheet was stacked on the resin-impregnated wood board 1a. The built-in backup board 5 is stacked on the first adhesive sheet. The second adhesive sheet was stacked on the built-in backup board 5. The resin-impregnated wood board 1b was stacked on the second adhesive sheet, thereby forming a stack structure.

The stack structure was then subjected to a hot press process under the same conditions as described in Example 1 so that the stack structure was deformed while curing the impregnated resin in the resin-impregnated wood boards 1a and 1b. As a result of the hot press process, a wooden mold 50 was produced. The wooden mold 50 has a main central portion and opposing side portions 50a that extend from the main central portion. The main central portion is flat. The opposing side portions 50a are curved or bent toward the same direction to which a surface 50b of the wooden mold 50 faces. Curving or bending the opposing side portions 50a was performed so that the opposing side portions 50a have a curvature of 1.5R. The wood boards 1a and 1b were placed so that the grain directions thereof are parallel to each other.

An optional backup board 51 was formed on the surface 50b of the wooden mold 50 so that the optional backup board 51 faces to the direction in which the opposing side portions 50a are curved or bent. The optional backup board 51 was formed by an injection molding technique. The formed structure has a longitudinal length of 220 mm, a transverse length of 80 mm, and a thickness of 15 mm. The combination of the optional backup board 51 and the wooden mold 50 constitutes the wooden product 60 for vehicle interior. The wooden mold 50 of the wooden product 60 for vehicle interior has an opposite surface 50c to the surface 50b that is bounded with the optional backup board 51. The opposite surface 50c was coated with polyester coating.

The above-described wood boards 1a and 1b have a thickness of 0.2 mm. The wood boards 1a and 1b are made of maple. A phenolic resin impregnated sheet having a thickness of 0.2 mm was used as each adhesive sheet. An aluminum board having a thickness of 0.1 mm was used as the built-in backup board 51. An ABS resin containing 20% of glass fibers was used as the optional backup board 51. A resin solution having a concentration of 30% of the resin component was used. Dipping the wood boards 1a and 1b were carried out for 30 minutes.

A visual inspection of the wooden product 60 for vehicle interior of Example 10 was performed. It was confirmed that the wooden product 60 has no crack of wood. This demonstrates that the above-described processes are suitable for the formability.

A sample product was prepared by different processes from the processes of Example 1. The same wood boards as those of Example 1 were prepared. The wood boards were not dipped into any resin solution. Instead, the wood boards were coated by the same coating process as that of Example 1. The sample product was prepared in the same processes as those of Example 1, except that the coating process was carried out but any resin-implantation process was carried out.

The wooden product 60 for vehicle interior of Example 10 and the sample product were subjected to a moisture resistance test. For example, the wooden product 60 for vehicle interior of Example 10 and the sample product were placed at a temperature of 50°C and a humidity of 95% for 300 hours. Visual inspections of the wooden product 60 for vehicle interior of Example 10 and the sample product were performed. It was confirmed that the wooden product 60 for vehicle interior of Example 10 is lower in the deterioration of the surface smoothness than the sample product. This demonstrates that the wooden product 60 for vehicle interior of Example 10 is higher in moisture resistance than the sample product.

Example 11:

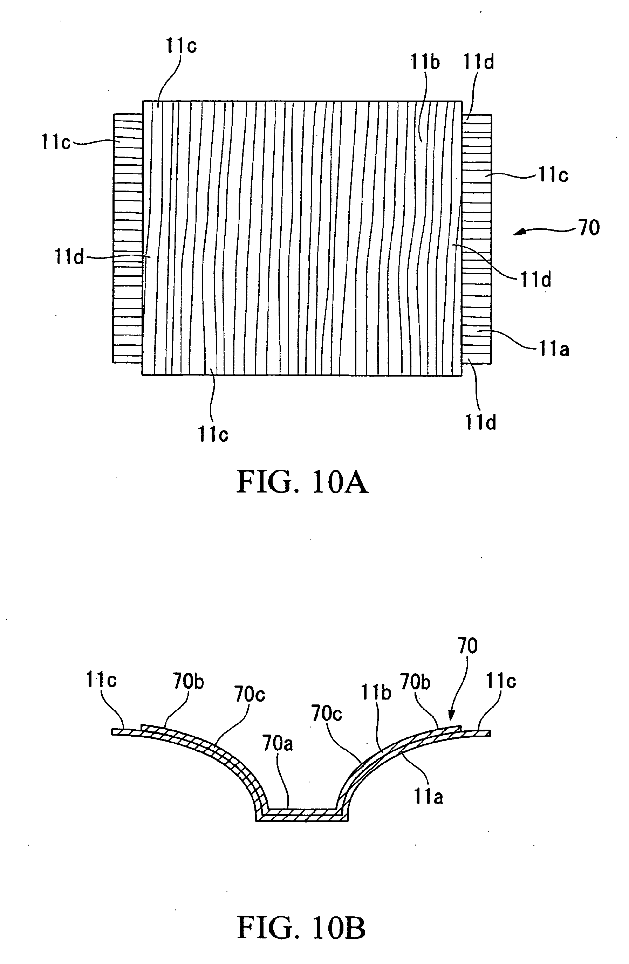

A wooden mold was prepared in the same manner as described in accordance with one aspect of the present invention. A wooden structure including the prepared wooden mold was used to produce a wooden product for vibration plate as an acoustic structure. FIG 10A is a plan view illustrating a wooden product for vibration plate in a step involved in a process for preparing the same. FIG 10B is a cross sectional elevation view illustrating the wooden product for vibration plate of FIG 10A. A wooden product 70 for vibration plate was produced as follows.

A resin solution was prepared, which is identical with the above-described resin solution of Example 2. Wood boards 11a and 11b were prepared. The wood boards 11a and 11b were dipped into the resin solution, thereby preparing resin-impregnated wood boards 11a and 11b. The resin-impregnated wood boards 11a and 11b were then dried in the same manner as described in Example 1.

A stacking process was carried out as follows. The resin-impregnated wood boards 11a and 11b were stacked or combined together, thereby forming a stack structure. The resin-impregnated wood boards 11a and 11b were stacked so that the grain directions of the resin-impregnated wood boards 11a and 11b are perpendicular to each other. The resin-impregnated wood board 11a has first opposing sides 11c and second opposing sides 11d. The resin-impregnated wood board 11b has first opposing sides 11c and second opposing sides 11d.

The resin-impregnated wood boards 11a and 11b are not entirely overlapped. The first opposing sides 11c of the resin-impregnated wood board 11 a are not aligned to the second opposing sides 11d of the resin-impregnated wood board 11b. The first opposing sides 11c of the resin-impregnated wood board 11a are positioned outside the second opposing sides 11d of the resin-impregnated wood board 11b. In other words, the first opposing sides 11c of the resin-impregnated wood board 11a are shown without being overlapped by the resin-impregnated wood board 11b.

The first opposing sides 11c of the resin-impregnated wood board 11b are not aligned to the second opposing sides 11d of the resin-impregnated wood board 11a. The first opposing sides 11c of the resin-impregnated wood board 11b are positioned outside the second opposing sides 11d of the resin-impregnated wood board 11a. In other words, the first opposing sides 11c of the resin-impregnated wood board 11b are shown without being overlapped by the resin-impregnated wood board 11a.

The stack structure was then subjected to a hot press process under conditions to be described below. By the hot press process, the stack structure was deformed while curing the impregnated resin in the resin-impregnated wood boards 11a and 11b. As a result of the hot press process, a vibration plate 70 was produced. The vibration plate 70 has a flat center portion 70a, and a curved non-center portion 70c which has a peripheral edge 70b. The flat center portion 70a has a circular shape in plan view. The vibration plate 70 has a modified truncated cone shape three-dimensionally. The curved non-center portion 70c is defined between the boundary with the flat center portion 70a and the peripheral edge 70b. The curved non-center portion 70c is curved. The vibration plate 70 was attached with a voice coil that is not illustrated, thereby forming a speaker.

The above-described wood boards 11a and 11b have a thickness of 0.2 mm. The wood boards 11a and 11b are made of spruce. A resin solution having a concentration of 60% of the resin component was used. Dipping the wood boards 11a and 11b were carried out for 30 minutes.

The above-described hot press process was carried out at a temperature of 150°C under a pressure of 0.5 MPa for 10 minutes.

It was confirmed that the speaker has good appearance. It was also confirmed that the speaker has good durable stability in shape. It was further confirmed that the timber of the speaker is good.

As used herein, the following directional terms "forward, rearward, above, downward, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, section or part of a device includes hardware and/or software that is constructed and/or programmed to carry out the desired function.

The terms of degree such as "substantially," "about," and "approximately" as used herein mean a reasonable amount of deviation of the modified term such that the end result is not significantly changed. For example, these terms can be construed as including a deviation of at least $\pm$ 5 percents of the modified term if this deviation would not negate the meaning of the word it modifies.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

**Claims**

1. A method of forming a wooden mold, the method comprising:

   impregnating a resin solution into at least one wood board thereby forming at least one resin-impregnated wood board, the resin solution including a resin component, the resin component comprising at least one water-soluble bifunctional acrylic resin and at least one trifunctional or higher-functional acrylic resin;
   deforming the at least one resin-impregnated wood board; and curing the resin component in the at least one resin-impregnated wood board;

   **characterized in that** the content of trifunctional or higher-functional acrylic resin in the resin component is less than the content of water-soluble bifunctional acrylic resin.

2. The method according to claim 1, wherein curing the resin component is carried out at the same time of deforming the at least one resin-impregnated wood board.

3. The method according to claim 1, wherein curing the resin component is carried out after deforming the at least one resin-impregnated wood board.

4. The method according to claim 1, wherein the resin solution further includes at least a curing agent.

5. The method according to claim 1, further comprising:

   dipping the at least one resin-impregnated wood board into a curing solution that contains at least a curing agent prior to curing the resin component.

6. The method according to claim 1, wherein the at least one wood board comprises plural wood boards, and the at least one resin-impregnated wood board comprises plural resin-impregnated wood boards.

7. The method according to claim 6, further comprising:

   stacking the plural resin-impregnated wood boards thereby forming a stack structure,

wherein deforming the at least one resin-impregnated wood board comprises deforming the stack structure.

8. The method according to claim 6, wherein curing the resin component comprises curing the resin component while contacting the plural resin-impregnated wood boards with each other.

9. The method according to claim 1, wherein the wood board has a thickness in the range of 0.1 mm to 1 mm.

10. The method according to claim 1, wherein the at least one water-soluble bifunctional acrylic resin has a number average molecular weight in the range of 300 to 2500.

11. The method according to claim 1, wherein the resin component consists essentially of the at least one water-soluble bifunctional acrylic resin and the at least one trifunctional or higher-functional acrylic resin, and
wherein the content of the at least one trifunctional or higher-functional acrylic resin in the resin component is in the range of 1 wt. % to 20 wt. %.

12. The method according to claim 6, further comprising:

preparing at least one built-in backup board; and
stacking the plural resin-impregnated wood boards and the at least one built-in backup board, so that the at least one built-in backup board is interposed between the plural resin-impregnated wood boards, thereby forming a stack structure,

wherein deforming the at least one resin-impregnated wood board comprises deforming the stack structure.

13. The method according to claim 1 further comprising:

preparing at least one backup board, and

wherein deforming the at least one resin-impregnated wood board comprises deforming the at least one resin-impregnated wood board along the shape of the at least one backup board so as to adhere the at least one resin-impregnated wood board with the at least one backup board.

14. The method according to claim 1, further comprising:

forming at least one backup board that extends along the at least one resin-impregnated wood board, after deforming the at least one resin-impregnated wood board, and after curing the resin component.

15. The method according to claim 14, wherein forming the at least one backup board comprises an injection molding process.

16. The method according to claim 1, further comprising:

preparing at least one backup board, and
adhering the at least one backup board to the at least one resin-impregnated wood board, after deforming the at least one resin-impregnated wood board, and after curing the resin component.

17. A wooden structure comprising:

at least one resin-impregnated deformed wood board that includes a resin component,
the resin component comprising at least one water-soluble bifunctional acrylic resin and at least one trifunctional or higher-functional acrylic resin,

**characterized in that** the content of trifunctional or higher-functional acrylic resin in the resin component is less than the content of water-soluble bifunctional acrylic resin, and
that the content of the at least one trifunctional or higher-functional acrylic resin in the resin component is in the range of 1 wt. % to 20 wt. %.

18. The wooden structure according to claim 17, wherein the at least one resin-impregnated deformed wood board has a thickness in the range of 0.1 mm to mm.

**19.** The wooden structure according to claim 17, wherein the at least one water-soluble bifunctional acrylic resin has a number average molecular weight in the range of 300 to 2500.

## Patentansprüche

**1.** Verfahren zum Ausbilden einer hölzernen Gießform, wobei das Verfahren Folgendes aufweist:

Imprägnieren einer Harzlösung in wenigstens ein Holzbrett, wobei dabei wenigstens ein harzimprägniertes Holzbrett gebildet wird, wobei die Harzlösung eine Harzkomponente beinhaltet, und wobei die Harzkomponente wenigstens ein wasserlösliches bifunktionales Acrylharz und wenigstens ein trifunktionales oder höherfunktionales Acrylharz aufweist; Verformen des wenigstens einen harzimprägnierten Holzbretts; und Aushärten der Harzkomponente in dem wenigstens einen harzimprägnierten Holzbrett;

**dadurch gekennzeichnet, dass** der Anteil von trifunktionalem oder höherfunktionalem Acrylharz in der Harzkomponente geringer ist als der Anteil von wasserlöslichem bifunktionalem Acrylharz.

**2.** Verfahren nach Anspruch 1, wobei das Aushärten der Harzkomponente zur selben Zeit ausgeführt wird, wie das Verformen des wenigstens einen harzimprägnierten Holzbretts.

**3.** Verfahren nach Anspruch 1, wobei das Aushärten der Harzkomponente nach dem Verformen des wenigstens einen harzimprägnierten Holzbretts ausgeführt wird.

**4.** Verfahren nach Anspruch 1, wobei die Harzlösung ferner wenigstens ein Aushärtemittel beinhaltet.

**5.** Verfahren nach Anspruch 1, das ferner aufweist:

Eintauchen des wenigstens einen harzimprägnierten Holzbretts in eine Aushärtelösung, die wenigstens ein Aushärtemittel beinhaltet, vor dem Aushärten der Harzkomponente.

**6.** Verfahren nach Anspruch 1, wobei das wenigstens eine Holzbrett mehrere Holzbretter aufweist, und das wenigstens eine harzimprägnierte Holzbrett mehrere harzimprägnierte Holzbretter aufweist.

**7.** Verfahren nach Anspruch 6, das ferner aufweist:

Stapeln der mehreren harzimprägnierten Holzbretter wodurch dabei eine Stapelstruktur gebildet wird, wobei das Verformen des wenigstens einen harzimprägnierten Holzbretts das Verformen der Stapelstruktur aufweist.

**8.** Verfahren nach Anspruch 6, wobei das Aushärten der Harzkomponente das Aushärten der Harzkomponente während des Kontakts der mehreren harzimprägnierten Holzbretter miteinander aufweist.

**9.** Verfahren nach Anspruch 1, wobei das Holzbrett eine Dicke im Bereich von 0,1 mm bis 1 mm aufweist.

**10.** Verfahren nach Anspruch 1, wobei das wenigstens eine wasserlösliche bifunktionale Acrylharz ein mittleres Molekulargewicht im Bereich von 300 bis 2500 aufweist.

**11.** Verfahren nach Anspruch 1, wobei die Harzkomponente im Wesentlichen aus dem wenigstens einen wasserlöslichen bifunktionalen Acrylharz und dem wenigstens einen trifunktionalen oder höherfunktionalen Acrylharz besteht, und wobei der Anteil des wenigstens einen trifunktionalen oder höherfunktionalen Acrylharzes in der Harzkomponente im Bereich von 1 Gew% bis 20 Gew% liegt.

**12.** Verfahren nach Anspruch 6, das ferner aufweist:

Anfertigen wenigstens eines eingebauten Stützbretts; und Stapeln der mehreren harzimprägnierten Holzbretter und des wenigstens einen eingebauten Stützbretts, derart, dass das wenigstens eine eingebaute Stützbrett zwischen den mehreren harzimprägnierten Holzbrettern eingefügt ist, wodurch eine Stapelstruktur gebildet wird,

wobei das Verformen des wenigstens einen harzimprägnierten Holzbretts das Verformen der Stapelstruktur aufweist.

**13.** Verfahren nach Anspruch 1, das ferner aufweist:

Anfertigen wenigstens eines Stützbretts, wobei das Verformen des wenigstens einen harzimprägnierten Holzbretts, das Verformen des wenigstens einen harzimprägnierten Holzbretts entlang der Form des wenigstens einen Stützbretts aufweist, um ein Anhaften des wenigstens einen harzimprägnierten Holzbretts an dem wenigstens einen Stützbrett zu erreichen.

**14.** Verfahren nach Anspruch 1, das ferner aufweist:

Ausbilden wenigstens eines Stützbretts das sich entlang des wenigstens einen harzimprägnierten Holzbretts erstreckt nach dem Verformen des wenigstens einen harzimprägnierten Holzbretts und nach dem Aushärten der Harzkomponente.

**15.** Verfahren nach Anspruch 14, wobei das Verformen des wenigstens einen Stützbretts einen Spritzgießprozess aufweist.

**16.** Verfahren nach Anspruch 1, das ferner aufweist:

Anfertigen wenigstens eines Stützbretts und
Anhaften des wenigstens einen Stützbretts an dem wenigstens einen harzimprägnierten Holzbrett nach dem Verformen des wenigstens einen harzimprägnierten Holzbretts und nach dem Aushärten der Harzkomponente.

**17.** Holzstruktur, die Folgendes aufweist:

wenigstens ein harzimprägniertes verformtes Holzbrett, das eine Harzkomponente beinhaltet, wobei die Harzkomponente wenigstens ein wasserlösliches bifunktionales Acrylharz und wenigstens ein trifunktionales oder höherfunktionales Acrylharz aufweist,

**dadurch gekennzeichnet, dass** der Anteil von trifunktionalem oder höherfunktionalem Acrylharz in der Harzkomponente geringer ist, als der Anteil von wasserlöslichem bifunktionalem Acrylharz, und dass der Anteil des wenigstens einen trifunktionalen oder höherfunktionalen Acrylharzes in der Harzkomponente im Bereich von 1 Gew.% bis 20 Gew.% liegt.

**18.** Holzstruktur gemäß Anspruch 17, wobei das wenigstens eine harzimprägnierte verformte Holzbrett eine Dicke im Bereich von 0,1 mm bis 1 mm aufweist.

**19.** Holzstruktur gemäß Anspruch 17, wobei das wenigstens eine wasserlösliche bifunktionale Acrylharz ein mittleres Molekulargewicht im Bereich von 300 bis 2500 aufweist.

**Revendications**

**1.** Procédé pour former un façonnage en bois, le procédé comprenant les étapes suivante

imprégner une solution de résine dans au moins, une planche en bois formant ainsi au moins une planche en bois imprégnée de résine, la solution de résine comprenant un composant de résine, le composant de résine comprenant au moins une résine acrylique bifonctionnelle soluble dans l'eau et au moins une résine acrylique trifonctionnelle ou de fonctionnalité supérieure ;
déformer ladite au moins une planche en bois imprégnée de résine ; et
polymériser le composant de résine dans ladite au moins une planche en bois imprégnée de résine ;
**caractérisé en ce que** le contenu en résine acrylique trifonctionnelle ou de fonctionnalité supérieure, dans le composant de résine, est inférieur au contenu en résine acrylique bifonctionnelle soluble dans l'eau.

**2.** Procédé selon la revendication 1, dans lequel la polymérisation du composant de résine est réalisée en même temps que la déformation de ladite au moins une planche en bois imprégnée de résine.

3. Procédé selon la revendication 1, dans lequel la polymérisation du composant de résine est réalisée après la déformation de ladite au moins une planche en bois imprégnée de résine.

4. Procédé selon la revendication 1, dans lequel la solution de résine comprend en outre au moins un agent de polymérisation.

5. Procédé selon la revendication 1, comprenant en outre :

tremper ladite au moins une planche en bois imprégnée de résine dans une solution de polymérisation qui contient au moins un agent de polymérisation avant de polymériser le composant de résine.

6. Procédé selon la revendication 1, dans lequel ladite au moins une planche en bois comprend plusieurs planches en bois, et ladite au moins une planche en bois imprégnée de résine comprend plusieurs planches en bois imprégnées de résine.

7. Procédé selon la revendication 6, comprenant en outre :

empiler la pluralité de planches en bois imprégnées de résine pour former ainsi une structure empilée,

dans lequel la déformation de ladite au moins une planche en bois imprégnée de résine comprend la déformation de la structure empilé.

8. Procédé selon la revendication 6, dans lequel la polymérisation du composant de résine comprend une polymérisation du composant de résine tout en mettant en contact la pluralité de planches en bois imprégnées de résine entre elles.

9. Procédé selon la revendication 1, dans lequel la planche en bois a une épaisseur dans une plage de 0,1 mm à 1 mm.

10. Procédé selon la revendication 1, dans lequel ladite au moins une résine acrylique bifonctionnelle soluble dans l'eau a un poids moléculaire moyen dans une plage de 300 à 2500.

11. Procédé selon la revendication 1, dans lequel le composant de résine est constitué essentiellement de ladite au moins une résine acrylique bifonctionnelle soluble dans l'eau et de ladite au moins une résine acrylique trifonctionnelle ou de fonctionnalité supérieure, et
dans lequel le contenu en ladite au moins une résine acrylique trifonctionnelle ou de fonctionnalité supérieure dans le composant de résine est dans une plage de 1 % en poids à 20 % en poids.

12. Procédé selon la revendication 6, comprenant en outre :

préparer au moins une planche de soutien intégrée ; et
empiler la pluralité de planches en bois imprégnées de résine et ladite au moins une planche de soutien intégrée, de telle sorte que ladite au moins une planche de soutien intégrée soit intercalée entre la pluralité de planches en bois imprégnées de résine, formant ainsi une structure empilée,

dans lequel la déformation de ladite au moins une planche en bois imprégnée de résine comprend la déformation de la structure empilée.

13. Procédé selon la revendication 1, comprenant en outre :

préparer au moins une planche de soutien, et

dans lequel la déformation de ladite au moins une planche en bois imprégnée de résine comprend une déformation de ladite au moins une planche en bois imprégnée de résine suivant la forme de ladite au moins une planche de soutien de façon à faire adhérer ladite au moins une planche en bois imprégnée de résine avec ladite au moins une planche de soutien.

**14.** Procédé selon la revendication 1, comprenant en outre :

> former au moins une planche de soutien qui s'étend suivant ladite au moins une planche en bois imprégnée de résine, après avoir déformé ladite au moins une planche en bois imprégnée de résine, et après avoir polymérisé le composant de résine.

**15.** Procédé selon la revendication 14, dans lequel la formation de ladite au moins une planche de soutien comprend un processus de moulage par injection.

**16.** Procédé selon la revendication 1, comprenant en outre :

> préparer au moins une planche de soutien, et
> faire adhérer ladite au moins une planche de soutien sur ladite au moins une planche en bois imprégnée de résine, après avoir déformé ladite au moins une planche en bois imprégnée de résine, et après avoir polymérisé le composant de résine.

**17.** Structure en bois comprenant :

> au moins une planche en bois déformée imprégnée de résine qui comprend un composant de résine,
> le composant de résine comprenant au moins une résine acrylique bifonctionnelle soluble dans l'eau et au moins une résine acrylique trifonctionnelle ou de fonctionnalité supérieure,
>
> **caractérisée en ce que** le contenu en résine acrylique trifonctionnelle ou de fonctionnalité supérieure dans le composant de résiné est inférieur au contenu en résine acrylique bifonctionnelle soluble dans l'eau, et
> **en ce que** le contenu en ladite au moins une résine acrylique trifonctionnelle ou de fonctionnalité supérieure dans le composant de résine est dans une plage de 1 % en poids à 20 % en poids.

**18.** Structure en bois selon la revendication 17, dans laquelle ladite au moins une planche en bois déformée imprégnée de résine a une épaisseur dans une plage de 0,1 mm à 1 mm.

**19.** Structure en bois selon la revendication 17, dans laquelle ladite au moins une résine acrylique bifonctionnelle soluble dans l'eau a un poids moléculaire moyen dans une plage de 300 à 2500.

FIG. 1

FIG. 2A

FIG. 2B

FIG. 2C

FIG. 3

FIG. 4A

FIG. 4B

FIG. 5

FIG. 6A

FIG. 6B

FIG. 6C

FIG. 6D

FIG. 7A

FIG. 7B

FIG. 8A

FIG. 8B

FIG. 8C

FIG. 8D

FIG. 9A

FIG. 9B

11c                                    11b  11d

11c

11c

70

11d

11d

11a

11c                        11d

## FIG. 10A

11c    70b    70c        70c    11b  70b    11c
                    70a              70

                                11a

## FIG. 10B

| Ex. | | WOOD BOARD | | RESIN SOLUTION | | | | | | | | | | | | | | | VAR (%) | RF (%) |
|---|---|---|---|---|---|---|---|---|---|---|---|---|---|---|---|---|---|---|---|---|---|
| | | | | RESIN COMPONENT | | | | | | | | | | | OTHERS | | | | | |
| | | | | NON-F | | | 1F | | | 2F | | | 3F | | CA | | SUR | | | |
| | | MATERIAL | T (mm) | M | MW | wt.% | M | MW | wt.% | M | MW | wt.% | M | wt.% | M | PART 1 | M | PART 2 | | |
| Ex. | 1 | BEM | 0.1 | — | — | — | — | — | — | 2P(1) | 770 | 95 | 3P | 5 | H(1) | 1 | A | 1 | 3.1 | 12 |
| | 2 | BEM | 0.2 | — | — | — | — | — | — | 2P(1) | 770 | 95 | 3P | 5 | H(1) | 1 | A | 1 | 2.9 | 10 |
| | 3 | BEM | 1 | — | — | — | — | — | — | 2P(1) | 770 | 95 | 3P | 5 | H(1) | 1 | A | 1 | 2.7 | 7 |
| | 4 | BEM | 0.2 | — | — | — | — | — | — | 2P(4) | 302 | 95 | 3P | 5 | H(1) | 1 | A | 1 | 3 | 15 |
| | 5 | BEM | 0.2 | — | — | — | — | — | — | 2P(5) | 1034 | 95 | 3P | 5 | H(1) | 1 | A | 1 | 2.8 | 8 |
| | 6 | BEM | 0.2 | — | — | — | — | — | — | 2P(6) | 2200 | 95 | 3P | 5 | H(1) | 1 | A | 1 | 3.6 | 8 |
| | 7 | BEM | 0.2 | — | — | — | — | — | — | 2P(1) | 770 | 99 | 3P | 1 | H(1) | 1 | — | — | 3 | 19 |
| | 8 | BEM | 0.2 | — | — | — | — | — | — | 2P(2) | 522 | 80 | 3P | 20 | H(2) | 1 | A | 2 | 2.8 | 12 |
| | 9 | CW | 0.2 | — | — | — | — | — | — | 2P(1) | 770 | 90 | 3P | 10 | H(1) | 1 | A | 1 | 3.3 | 16 |
| Comp. Ex. | 1 | BEM | 0.2 | — | — | — | — | — | — | 2P(1) | 770 | 100 | — | — | H(1) | 1 | A | 1 | 2.9 | 52 |
| | 2 | BEM | 0.2 | — | — | — | 1P | 468 | 90 | 2P(1) | 770 | 10 | — | — | H(2) | 1 | — | — | 3 | 41 |
| | 3 | BEM | 0.2 | — | — | — | — | — | — | 2P(3) | 526 | 100 | — | — | H(3) | 4 | — | — | 3.5 | 40 |
| | 4 | BEM | 0.2 | OP | 600 | 100 | — | — | — | — | — | — | — | — | — | — | — | — | 2.9 | 93 |
| | 5 | BEM | 0.2 | — | — | — | — | — | — | — | — | — | — | — | — | — | — | — | 6.5 | — |

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006198192 A
- JP 2002144301 A
- JP 3198471 B
- JP 5220712 A
- WO 2005042175 A1
- US 4504520 A
- US 2004038062 A1
- US 2003150548 A1